# EUROPEAN PATENT SPECIFICATION

(11) **EP 3 952 151 B1**
(45) Date of publication and mention of the grant of the patent: **15.05.2024**
(21) Application number: 20799222.3
(22) Date of filing: 19.01.2020
(51) Int. Cl.: H04J 14/02, G02B 6/12, G02B 6/293

(54) **OPTICAL ADD-DROP MULTIPLEXING APPARATUS AND METHOD FOR CONTROLLING SAME**
OPTISCHES ADD-DROP-MULTIPLEXGERÄT UND STEUERVERFAHREN DAFÜR
APPAREIL DE MULTIPLEXAGE OPTIQUE À INSERTION-EXTRACTION ET PROCÉDÉ DE COMMANDE ASSOCIÉ

(30) Priority: 30.04.2019 CN 201910363089
(43) Date of publication of application: 09.02.2022
(73) Proprietor: Huawei Technologies Co., Ltd., Shenzhen, Guangdong 518129 (CN)
(72) Inventor: MI, Guangcan, Shenzhen, Guangdong 518129 (CN); JI, Ruiqiang, Shenzhen, Guangdong 518129 (CN); LI, Yanbo, Shenzhen, Guangdong 518129 (CN)
(74) Representative: Pfenning, Meinig & Partner mbB
(86) International application number: PCT/CN2020/072915
(87) International publication number: WO 2020/220770

(56) References cited:
- EP-A1- 2 095 553
- CN-A- 101 227 247
- CN-A- 101 552 648
- CN-A- 101 552 648
- CN-A- 108 702 235
- US-A1- 2008 193 133
- US-A1- 2008 193 133
- US-A1- 2012 257 130

## Description

### TECHNICAL FIELD

This application relates to the field of integrated photonic technologies, and in particular, to an optical add/drop multiplexer apparatus and a control method thereof.

### BACKGROUND

With development of the integrated photonic technology, a microring resonator (MRR) structure starts to be used to build an optical add/drop multiplexer (OADM). Specifically, because there is a linear relationship between a resonance wavelength of an MRR and an effective refractive index of a microring waveguide, the effective refractive index of the microring waveguide in the MRR is changed by using a thermo-optic effect or an electro-optic effect, to change the resonance wavelength of the microring waveguide. In this way, a tunable optical add/drop multiplexer (TOADM) is implemented.

When the TOADM is used on a wavelength division multiplexing (WDM) network, a tunable range of the resonance wavelength of the MRR is required to reach about 40 nm, to cover a full C band. Currently, a commonly used TOADM uses one or more cascaded microrings with a same waveguide size and radius to form a microring add/drop carrier filter, and the effective refractive index of the microring waveguide is changed by using a phase shifter (PS) based on the thermo-optic effect, to cover the full C band.

The tunable range of the MRR is determined by a free spectral range (FSR), and the FSR is inversely proportional to a microring radius. In other words, a smaller microring radius indicates a larger FSR. Therefore, for a TOADM that covers the full C band, a microring radius of the TOADM should be small enough to obtain an FSR that covers the full C band. Such a microring radius size imposes an extremely high requirement on stability and reliability of a microring manufacturing process, increasing difficulty in microring manufacturing.

EP 2095553 describes a method and device for hitless tunable optical filtering.

US 2012/257130 describes a tunable wavelength filter based on a symmetric PLC circuit comprising an MZ filter-based demultiplexer, a waveguide resonator, and an MZ filter-based multiplexer.

CN 101552648 describes a reconfigurable optical add-drop multiplexer (an ROADM structure) for realizing 16 channels with multiple orders.

### SUMMARY

To address the foregoing technical defects, embodiments of this application provide an optical add/drop multiplexer apparatus and a control method thereof, to reduce a requirement on an FSR of a microring filter by using a band division manner, reduce a radius of the microring filter, reduce manufacturing difficulty of the microring filter, and improve reliability of the optical add/drop multiplexer apparatus.

According to a first aspect, an embodiment of this application provides an optical add/drop multiplexer apparatus. The optical add/drop multiplexer apparatus is an integrated optical chip, and includes a filter unit, a waveband multiplexer/demultiplexer unit, an input port, an output port, and an add port and/or a drop port. The filter unit includes a plurality of microring filters, the filter unit is connected to the waveband multiplexer/demultiplexer unit, and the waveband multiplexer/demultiplexer unit is separately connected to the input port, the output port, the add port (if present), and the drop port (if present). The waveband multiplexer/demultiplexer unit is configured to input, based on wavelength of one or more input optical signals, the one or more input optical signals into a microring filter corresponding to a band to which the one or more input optical signals belong. One band corresponds to at least one microring filter, and each microring filter has a different resonance wavelength. The one or more input optical signals include an optical signal at the input port and/or an optical signal at the add port (if present). For example, the one or more input optical signals may be the optical signal at the input port, or may be the optical signal at the add port (if present), or may include both the optical signal at the input port and the optical signal at the add port (if present). The filter unit is configured to couple a target optical signal from the input port to the drop port (if present), and/or couple the target optical signal from the add port (if present) to the output port. The target optical signal refers to an optical signal whose wavelength is equal to a resonance wavelength of the microring filter in the input optical signal. The waveband multiplexer/demultiplexer unit is further configured to output the target optical signal coupled to the output port and/or the drop port (if present).

In the first aspect, different bands are divided, and microring filters corresponding to different bands in the filter unit are used to filter the optical signal. It is easy to understand that after the bands are divided, a wavelength range corresponding to each band may be reduced. In this case, when an optical signal of each band is filtered by using the respective microring filter, a requirement on an FSR of the microring filter may be reduced, and a microring filter with a relatively large microring radius may be used. This reduces manufacturing difficulty of the microring filter, and improves reliability of the optical add/drop multiplexer apparatus.

It should be noted that, according to the first aspect, an optical add/drop multiplexer apparatus in three solutions are provided: Only the add port is included, only the drop port is included, or the add port and the drop port are included. For ease of subsequent description, a connection structure between the input port and the output port in the optical add/drop multiplexer apparatus is referred to as an input-output port or an input-output channel. Similarly, a connection structure between the add port and the drop port is referred to as an add-drop port or an add-drop channel.

In a possible implementation of the first aspect, the microring filter has a tunable coupler (TC), and the filter unit is specifically configured to control the microring filter to be in a working state by using the TC, and couple the target optical signal from the input port to the drop port (if present), and/or couple the target optical signal from the add port (if present) to the output port. In this implementation, a status (the working state and an offline state) of a microring add/drop filter may be adjusted by using the tunable coupler, to flexibly control the microring add/drop filter. In addition, a working band range of the microring add/drop filter may be changed by switching between the working state and the offline state.

In a possible implementation of the first aspect, add-drop ports of the optical add/drop multiplexer apparatus may be connected by using a grating coupler and a directional waveguide coupler. Specifically, the waveband multiplexer/demultiplexer unit may include a first grating coupling module, and the first grating coupling module may include the grating coupler and the waveguide directional coupler. A quantity of grating couplers is equal to a quantity of waveguide directional couplers, and is equal to Y, in other words, Y is equal to (A*N), where A is an integer not less than 1, N indicates a quantity of bands, and N is an integer greater than 2. In other words, the quantity of grating couplers and the quantity of waveguide directional couplers are equal to an integer multiple of the quantity N of bands. When A is 1, the first grating coupling module may include N grating couplers and N waveguide directional couplers. Alternatively, when A is greater than 1, the first grating coupling module may include (A*N) grating couplers and (A*N) waveguide directional couplers. A connection relationship between the grating coupler and the waveguide directional coupler in the first grating coupling module is: A drop port of each grating coupler in the first grating coupling module is separately connected to an add port of a corresponding microring filter, and an add port of each waveguide directional coupler in the first grating coupling module is separately connected to a drop port of the corresponding microring filter. An input port of the first grating coupler is the add port, an output port of an X^{th} grating coupler is connected to an input port of an X^{th} waveguide directional coupler, an output port of the X^{th} waveguide directional coupler is connected to an input port of an (X+1)^{th} grating coupler, and an output port of a Y^{th} waveguide directional coupler is the drop port, where X is a positive integer less than Y In this possible implementation, bands are divided for a to-be-added signal at the add port and a to-be-dropped signal at the drop port by using the grating coupler and the waveguide directional coupler. The wavelength range corresponding to each band is reduced after the bands are divided, and therefore the microring filter filters an optical signal with a relatively small wavelength range, to reduce the requirement on the FSR of the microring filter.

In a first possible implementation of the first aspect, the add-drop ports of the optical add/drop multiplexer apparatus may alternatively be connected by using the band pass combiner/splitter. Specifically, the waveband multiplexer/demultiplexer unit may include a first band pass combiner/splitter and a second band pass combiner/splitter. A quantity of first band pass combiners/splitters is equal to a quantity of second band pass combiners/splitters, and both are equal to A. Each first band pass combiner/splitter includes one input port and N output ports, and each second band pass combiner/splitter includes N input ports and one output port. The one input port of the first band pass combiner/splitter is one add port, and one output port of the first band pass combiner/splitter is connected to an add port of one microring filter. In other words, the N output ports of the first band pass combiner/splitter are separately connected to add ports of N microring filters. The one output port of the second band pass combiner/splitter is one drop port, and one input port of the second band pass combiner/splitter is correspondingly connected to a drop port of the one microring filter. In other words, the N input ports of the second band pass combiner/splitter are separately connected to drop ports of the N microring filters. A microring filter connected to the input port of the first band pass combiner/splitter and the output port of the second band pass combiner/splitter may be a same microring filter, or may be different microring filters. In this possible implementation, the bands are divided for the to-be-added signal at the add port and the to-be-downloaded signal at the drop port by using a band pass combiner/splitter. After the bands are divided, the wavelength range corresponding to each band is reduced, and therefore the microring filter filters the optical signal with the relatively small wavelength range, to reduce the requirement on the FSR of the microring filter.

The add-drop ports of the optical add/drop multiplexer apparatus are connected by using the grating coupler and the directional waveguide coupler. In other words, the waveband multiplexer/demultiplexer unit includes the first grating coupling module. Alternatively, the add-drop ports of the optical add/drop multiplexer apparatus are connected by using the band pass combiner/splitter. In other words, the waveband multiplexer/demultiplexer unit includes the band pass combiner/splitter. Correspondingly, input-output ports of the optical add/drop multiplexer apparatus may be connected by using the grating coupler.

In a possible implementation of the first aspect, one add-drop channel is used as an example to describe the connection structure of the input-output port of the optical add/drop multiplexer apparatus by using the grating coupler. Specifically, the waveband multiplexer/demultiplexer unit includes the first grating coupling module. Alternatively, in addition to the first band pass combiner/splitter and the second band pass combiner/splitter, the waveband multiplexer/demultiplexer unit may include a second grating coupling module. The second grating coupling module includes a grating coupler, and a quantity of grating couplers in the second grating coupling module is equal to the quantity N of bands, where N is an integer not less than 2. In a case in which there is only one add-drop channel, A is equal to 1, and one band corresponds to one microring filter. The filter unit includes the N microring filters, and one grating coupler in the second grating coupling module corresponds to one microring filter. A connection relationship between the microring filter and the grating coupler is: In the second grating coupling module, a drop port of each grating coupler is separately connected to an input port of a corresponding microring filter, and an add port of each grating coupler is separately connected to an output port of the corresponding microring filter. An input port of a first grating coupler is the input port, an output port of an M^{th} grating coupler is coupled to an input port of an (M+1)^{th} grating coupler, and an output port of an N^{th} grating coupler is the output port, where M is an integer not greater than N.

In a possible implementation of the first aspect, a plurality of add-drop channels are used as an example to describe the connection structure of the input-output port of the optical add/drop multiplexer apparatus by using the grating coupler. Specifically, the waveband multiplexer/demultiplexer unit includes the first grating coupling module. Alternatively, in addition to the first band pass combiner/splitter and the second band pass combiner/splitter, the waveband multiplexer/demultiplexer unit may include a second grating coupling module. The second grating coupling module includes a grating coupler, and a quantity of grating couplers in the second grating coupling module is equal to the quantity N of bands, where N is an integer not less than 2. In a case in which there are the plurality of add-drop channels, A is an integer greater than 1, A is a quantity of add-drop channels, and one band corresponds to the plurality of microring filters. The filter unit includes (A*N) microring filters, and one grating coupler in the second grating coupling module corresponds to A microring filters. In the second grating coupling module, a drop port of each grating coupler is separately connected to an input port of a first microring filter in the A corresponding microring filters, and an add port of each grating coupler is separately connected to an output port of an A^{th} microring filter in the A corresponding microring filters. An input port of a first grating coupler is the input port, an output port of an M^{th} grating coupler is coupled to an input port of an (M+1)^{th} grating coupler, and an output port of an N^{th} grating coupler is the output port, where M is an integer not greater than N. In the A microring filters corresponding to each grating coupler, an output port of an X^{th} microring filter is connected to an input port of an (X+1)^{th} microring filter, where X is an integer not less than 1.

In any one of the foregoing designs of the add-drop port, the input-output ports of the optical add/drop multiplexer apparatus may be connected by using the band pass combiner/splitter.

In a possible implementation of the first aspect, one add-drop channel is used as an example to describe a connection structure of a band pass combiner/splitter that may be used between input-output ports of the optical add/drop multiplexer apparatus. Specifically, the waveband multiplexer/demultiplexer unit includes the first grating coupling module. Alternatively, in addition to the first band pass combiner/splitter and the second band pass combiner/splitter, the waveband multiplexer/demultiplexer unit may further include a third band pass combiner/splitter and a fourth band pass combiner/splitter. The third band pass combiner/splitter includes one input port and N output ports, and the fourth band pass combiner/splitter includes N input ports and one output port. When there is only one add-drop channel, A is equal to 1, and one band corresponds to one microring filter. The filter unit includes the N microring filters, and the input port of the third band pass combiner/splitter is the input port. The N output ports of the third band pass combiner/splitter are separately connected to input ports of the N microring filters, output ports of the N microring filters are separately connected to the N input ports of the fourth band pass combiner/splitter, and the output port of the fourth band pass combiner/splitter is the output port.

In a possible implementation of the first aspect, a plurality of add-drop channels are used as an example to describe a connection structure of a band pass combiner/splitter that may be used between input-output ports of the optical add/drop multiplexer apparatus. Specifically, the waveband multiplexer/demultiplexer unit includes the first grating coupling module. Alternatively, the waveband multiplexer/demultiplexer unit including the first band pass combiner/splitter and the second band pass combiner/splitter may further include a third band pass combiner/splitter and a fourth band pass combiner/splitter. The third band pass combiner/splitter includes one input port and N output ports, and the fourth band pass combiner/splitter includes N input ports and one output port. When there are the plurality of add-drop channels, A is an integer greater than 2, A is a quantity of add-drop channels, and one band corresponds to the plurality of microring filters. The filter unit includes (A*N) microring filters, and the input port of the third band pass combiner/splitter is the input port. One output port of the third band pass combiner/splitter and one input port of the fourth band pass combiner/splitter correspond to A same microring filters. Each output port of the third band pass combiner/splitter is connected to an input port of a first microring filter in the A corresponding microring filters, each input port of the fourth band pass combiner/splitter is connected to an output port of an A^{th} microring filter in the A corresponding microring filters, and the output port of the fourth band pass combiner/splitter is the output port. In the corresponding A microring filters, an output port of an X^{th} microring filter is connected to an input port of an (X+1)^{th} microring filter, where X is an integer not less than 1.

In a possible implementation of the first aspect, the filter unit is further configured to adjust a resonance wavelength of the first microring filter to be equal to a resonance wavelength of a second microring filter. The waveband multiplexer/demultiplexer unit is further configured to adjust a working band of a waveguide directional coupler corresponding to the first microring filter from a band corresponding to the first microring filter to a band corresponding to the second microring filter, to back up a target optical signal corresponding to the second microring filter by using the first microring filter. Both the first microring filter and the second microring filter may be one or more filters in the filter unit. In the foregoing technical solution, the working band range of the waveguide directional coupler may be changed, so that sub-optical paths corresponding to the microring filters serve as mutual backup. If a microring add/drop filter in one group of optical paths fails, a wavelength signal may be transmitted through a backup sub-optical path by changing the working band range of the directional coupler. Finally, a wavelength add/drop function is implemented by using a microring filter with a tunable resonance wavelength.

In a possible implementation of the first aspect, either of the add port and/or the drop port is connected to a wedge-shaped waveguide, or is connected to an anti-reflection waveguide or a blocking waveguide that is based on an absorbing material. Alternatively, a waveguide corresponding to one of the add port and the drop port of the microring filter is a wedge-shaped waveguide, or an anti-reflection waveguide or a blocking waveguide that is based on an absorbing material. It should be noted that the add port or the drop port may alternatively be suspended (not connected to any waveguide). The foregoing technical solution may allow the add port or the drop port to have a high-loss structure having an anti-reflection function, and therefore a corresponding optical signal add/drop function cannot be implemented. It may be considered that the add port or the drop port exists but is unavailable, or it may be considered that the add port or the drop port does not exist.

In a possible implementation of the first aspect, the grating coupler includes but is not limited to a grating-assisted directional coupler and/or a grating-assisted contra-directional coupler. Specifically, all grating couplers in the first grating coupling module may be grating-assisted directional couplers. Alternatively, all the grating couplers in the first grating coupling module may be grating-assisted contra-directional couplers. Alternatively, there may be several grating-assisted directional couplers and several grating-assisted contra-directional couplers.

In a possible implementation of the first aspect, the band pass splitter includes but is not limited to a cascaded Mach-Zehnder interferometer and/or a wavelength-insensitive directional coupling element. The wavelength-insensitive directional coupling element includes but is not limited to a wavelength-insensitive power splitter (PS) and a wavelength-insensitive waveguide directional coupler. In addition, the PS may include a cascaded star splitter (SS) and a Y-branch splitter (Y-branch).

In a possible implementation of the first aspect, the microring filter may include but is not limited to a microring add/drop filter with a TC.

According to a second aspect, an embodiment of this application provides a control method for an optical add/drop multiplexer apparatus, including: inputting, based on wavelength of one or more input optical signals, the one or more input optical signals into a microring filter corresponding to a band to which the one or more input optical signals belong, where one band corresponds to at least one microring filter, each microring filter has a different resonance wavelength, and the one or more input optical signals include an optical signal at an input port and/or an add port; coupling a target optical signal from the input port to a drop port, and/or coupling a target optical signal from the add port to an output port, where the target optical signal is an optical signal whose wavelength is equal to a resonance wavelength of the microring filter in the input optical signal; and outputting the target optical signal coupled to the output port and/or the drop port.

In a possible implementation of the second aspect, the microring filter has a TC, and the method specifically includes: controlling, by using the TC, the microring filter to be in a working state, and coupling the target optical signal from the input port to the drop port, and/or coupling the target optical signal from the add port to the

In a possible implementation of the second aspect, the control method for the optical add/drop multiplexer apparatus further includes: adjusting a resonance wavelength of a first microring filter to be equal to a resonance wavelength of a second microring filter; and adjusting a working band of a second coupler corresponding to the first microring filter from a band corresponding to the first microring filter to a band corresponding to the second microring filter, to back up a target optical signal corresponding to the second microring filter by using the first microring filter. Both the first microring filter and the second microring filter may be one or more filters in a filter unit.

In a possible implementation of the second aspect, the control method for the optical add/drop multiplexer apparatus further includes: controlling, by using the TC, the microring filter to be in an offline state, and coupling the one or more input optical signals from the input port to the output port, or coupling the one or more input optical signals from the add port to the drop port; and outputting the one or more input optical signals coupled to the output port and/or the drop port.

In a possible implementation of the second aspect, the optical add/drop multiplexer apparatus may further switch between different wavelengths in a band corresponding to a same microring filter. Specifically, the control method for the optical add/drop multiplexer apparatus further includes: controlling the microring filter to be in the offline state, adjusting a resonance wavelength of the microring filter from a first wavelength to a second wavelength, and controlling the microring filter to be in the working state after the adjustment is completed, where both the first wavelength and the second wavelength belong to the band corresponding to the microring filter.

In a possible implementation of the second aspect, the optical add/drop multiplexer apparatus may further switch between wavelengths in bands corresponding to different microring filters. Specifically, the control method of the optical add/drop multiplexer apparatus further includes: controlling a third microring filter to be in the offline state, where a resonance wavelength of the third microring filter is the first wavelength; controlling a fourth microring filter to be in the offline state, and configuring a resonance wavelength of the fourth microring filter as the second wavelength; and keeping the third microring filter in the offline state, and switching the fourth microring filter to the working state.

It should be noted that, for other descriptions and beneficial effects corresponding to the second aspect and the possible implementations of the second aspect, refer to related descriptions in the first aspect and the related implementations of the first aspect. Details are not described herein again.

According to a third aspect, an embodiment not according to the claimed invention further provides an integrated optical chip, and the optical add/drop multiplexer apparatus according to any one of the first aspect or the implementations of the first aspect is integrated into the integrated optical chip. In a design, the integrated optical chip may be integrated into a system-on-a-chip SoC.

### BRIEF DESCRIPTION OF DRAWINGS

FIG. 1 is a schematic diagram of a structure of an OADM according to an embodiment of this application;
FIG. 2 is a schematic diagram of a structure of a first OADM and a second OADM according to an embodiment of this application;
FIG. 3(a) is a schematic diagram of a structure of a single-channel TOADM apparatus in a first OADM architecture according to an embodiment of this application;
FIG. 3(b) is a schematic connection diagram of a GADC, an ADF, and a waveguide directional coupler according to an embodiment of this application;
FIG. 4 is a schematic diagram of a structure of a single-channel TOADM apparatus in a second OADM architecture according to an embodiment of this application;
FIG. 5 is a schematic diagram of a structure of a two-channel TOADM apparatus in a first OADM architecture according to an embodiment of this application;
FIG. 6 is a schematic diagram of a structure of a third OADM and a fourth OADM according to an embodiment of this application;
FIG. 7(a) is a schematic diagram of a structure of a single-channel TOADM apparatus in a third OADM architecture according to an embodiment of this application;
FIG. 7(b) is another schematic diagram of a structure of a single-channel TOADM apparatus in a third OADM architecture according to an embodiment of this application;
FIG. 7(c) is a schematic diagram of a structure of a two-channel TOADM in a third OADM architecture according to an embodiment of this application;
FIG. 8 is a schematic diagram of a structure of a TOADM apparatus in a fourth OADM architecture according to an embodiment of this application; and
FIG. 9 is a schematic flowchart of an OADM control method according to an embodiment of this application.

### DESCRIPTION OF EMBODIMENTS

Embodiments of this application provide an optical add/drop multiplexer apparatus and a control method thereof, to reduce a microring radius by using a band division manner, reduce manufacturing difficulty of a microring filter, and improve reliability of the optical add/drop multiplexer apparatus.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner for describing objects having a same attribute in the embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device. "Waveband" and "band" in following descriptions have a same meaning, and "and/or" means that at least one of the items is included. For example, "A and/or B" may be A, may be B, or may be A and B. The "working state" in the embodiments of this application may be referred to as an "online state" or an "on state". Similarly, the "non-working state" may be referred to as an "offline state" or an "off state".

The following describes the embodiments of this application with reference to the accompanying drawings.

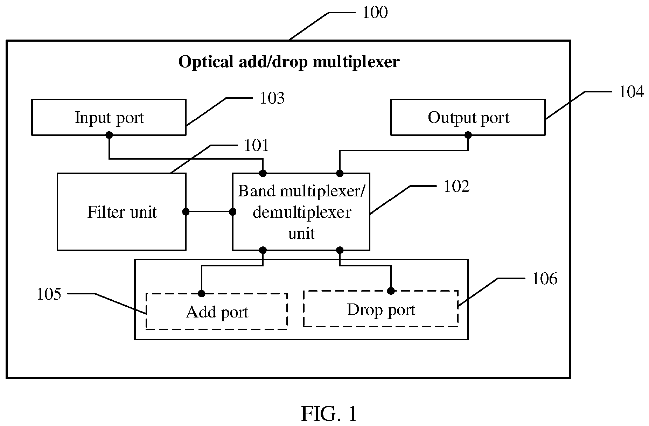

FIG. 1 is a schematic diagram of a structure of an OADM according to an embodiment of this application. As shown in FIG. 1, the OADM 100 is an integrated optical chip, and the OADM 100 may include a filter unit 101, a waveband multiplexer/demultiplexer unit 102, an input port 103, an output port 104, an add port 105, and/or a drop port 106. It should be noted that the OADM 100 may include the add port 105 or the drop port 106, namely, to form a three-port OADM. Alternatively, the OADM 100 may also include the add port and the drop port, namely, to form a four-port OADM. Specifically, a design may be performed according to an actual requirement. This is not limited in this application.

The waveband multiplexer/demultiplexer unit 102 is configured to input, based on wavelength of one or more input optical signals, the one or more input optical signals into a microring filter corresponding to a band to which the one or more input optical signals belong. One band corresponds to at least one microring filter, and each microring filter has a different resonance wavelength. The one or more input optical signals include an optical signal at the input port 103 and/or the add port 105. For example, the one or more input optical signals may be an optical signal at the input port 103, or may be an optical signal at the add port 105, or may include both the optical signal at the input port 103 and the optical signal at the add port 105.

The filter unit 101 is configured to control the microring filter to be in a working state, and couple the target optical signal from the input port 103 to the drop port 106, and/or couple the target optical signal from the add port 105 to the output port 104. The target optical signal is an optical signal whose wavelength is equal to a resonance wavelength of the microring filter in the input optical signal. The waveband multiplexer/demultiplexer unit 102 is further configured to output the target optical signal coupled to the output port 104 and/or the drop port 106.

It should be understood that a connection structure between the input port and the output port in the OADM may be referred to as an input-output port or an input-output channel. Similarly, a connection structure between the add port and the drop port may be referred to as an add-drop port or an add-drop channel. The following describes the OADM 100 in this embodiment of this application in detail with reference to the input-output channel and the add-drop channel.

The add-drop channel of the OADM 100 can be designed by using a serial solution or a parallel solution.

When the serial solution is used, the add-drop channel of the OADM 100 may specifically include a grating coupler and a directional waveguide coupler. To be specific, the waveband multiplexer/demultiplexer unit 102 may include a first grating coupling module. The first grating coupling module may include the grating coupler and the waveguide directional coupler. A quantity of grating couplers is equal to a quantity of waveguide directional couplers and is equal to Y, where Y is equal to (A*N), A is an integer not less than 1, N indicates a quantity of bands, and N is an integer greater than 2.

A connection relationship between the grating coupler, the waveguide directional coupler, and the microring filter in the OADM 100 is specifically as follows: A drop port of each grating coupler in the first grating coupling module is separately connected to an add port of a corresponding microring filter, and an add port of each waveguide directional coupler in the first grating coupling module is separately connected to a drop port of the corresponding microring filter. An input port of the first grating coupler is the add port 105, an output port of an X^{th} grating coupler is connected to an input port of an X^{th} waveguide directional coupler, an output port of the X^{th} waveguide directional coupler is connected to an input port of an (X+1)^{th} grating coupler, and an output port of a Y^{th} waveguide directional coupler is the drop port 106, where X is a positive integer less than Y

It should be noted that A represents a quantity of add-drop channels of the OADM 100. For example, when A=1, it indicates that there is one add-drop channel, and when A> 1, it indicates that there a plurality of add-drop channels.

When the OADM 100 is designed with three ports, a wedge-shaped waveguide, or an anti-reflection waveguide or a blocking waveguide that is based on an absorbing material may be disposed at a specific port of the microring filter. For example, for the OADM 100 having only an add function, the waveguide mentioned above may be disposed at a drop port of each microring filter of the OADM 100. Similarly, a design manner of an optical add/drop multiplexer apparatus having only a drop function includes: The wedge-shaped waveguide, or the anti-reflection waveguide or the blocking waveguide that is based on the absorbing material is disposed as a waveguide (namely, an add waveguide) corresponding to an add port of each microring filter in the optical add/drop multiplexer apparatus 100. It should be noted that the foregoing three-port design solution is applicable to OADMs with one or more add-drop channels. It should be noted that the add port or the drop port may alternatively be suspended (not connected to any waveguide). The foregoing technical solution may allow the add port or the drop port to be a high-loss structure having an anti-reflection function, and therefore an optical signal add/drop function cannot be implemented. It may be considered that the add port or the drop port exists but is unavailable, or it may be considered that the add port or the drop port does not exist.

When the parallel solution is used, the add-drop channel of the optical add-drop multiplexer apparatus 100 may be formed by connecting band pass combiners/splitters. Specifically, the waveband multiplexer/demultiplexer unit 102 may include a first band pass combiner/splitter and a second band pass combiner/splitter. A quantity of first band pass combiners/splitters is equal to a quantity of second band pass combiners/splitters, and both are equal to A. Each first band pass combiner/splitter includes one input port and N output ports, and each second band pass combiner/splitter includes N input ports and one output port. The one input port of the first band pass combiner/splitter is the add port 105. One output port of the first band pass combiner/splitter is connected to an add port of one microring filter. To be specific, the N output ports of the first band pass combiner/splitter are separately connected to add ports of N microring filters. The one output port of the second band pass combiner/splitter is the drop port 106. One input port of the second band pass combiner/splitter is correspondingly connected to a drop port of the one microring filter. To be specific, the N input ports of the second band pass combiner/splitter are separately connected to drop ports of the N microring filters.

Either the parallel solution or the serial solution is used to design the add-drop port, the grating coupler may be used to perform serial connection between input-output ports of the OADM. The waveband multiplexer/demultiplexer unit 102 may further include a second grating coupling module. The second grating coupling module includes a grating coupler. A quantity of grating couplers is equal to the quantity N of the bands.

When A is equal to 1, one band corresponds to one microring filter, and the filter unit 101 includes the N microring filters. One grating coupler in the second grating coupling module corresponds to one microring filter. A connection relationship between the microring filter and the grating coupler is as follows: A drop port of each grating coupler is separately connected to an input port of a corresponding microring filter. An add port of each grating coupler is separately connected to an output port of the corresponding microring filter. An input port of a first grating coupler is the input port 103. An output port of an M^{th} grating coupler is coupled to an input port of an (M+1)^{th} grating coupler. An output port of an N^{th} grating coupler is the output port 104, where M is an integer not greater than N.

When A is greater than 1, in other words, in a multi-channel design, one band corresponds to a plurality of microring filters. The filter unit 101 includes (A*N) microring filters. One grating coupler in the second grating coupling module corresponds to A microring filters. A drop port of each grating coupler in the second grating coupling module is connected to an input port of a first microring filter in the A corresponding microring filters. An add port of each grating coupler is separately connected to an output port of an A^{th} microring filter in the A corresponding microring filters. An input port of a first grating coupler is the input port 103. The output port of the M^{th} grating coupler is coupled to the input port of the (M+1)^{th} grating coupler. The output port of the N^{th} grating coupler is the output port 104, where M is an integer not greater than N. In the A microring filters corresponding to each grating coupler, an output port of an X^{th} microring filter is connected to an input port of an (X+1)^{th} microring filter, where X is an integer not less than 1.

Alternatively, the input-output ports of the OADM may be connected in parallel by using the band pass combiner/splitter. The waveband multiplexer/demultiplexer unit 102 may further include a third band pass combiner/splitter and a fourth band pass combiner/splitter. The third band pass combiner/splitter includes one input port and N output ports, and the fourth band pass combiner/splitter includes N input ports and one output port.

A is equal to 1, and one band corresponds to one microring filter. The filter unit 101 includes the N microring filters. The input port of the third band pass combiner/splitter is the input port 103, and the N output ports of the third band pass combiner/splitter are separately connected to input ports of the N microring filters. Output ports of the N microring filters are respectively connected to the N input ports of the fourth band pass combiner/splitter, and the output port of the fourth band pass combiner/splitter is the output port 104.

A is an integer greater than 1, namely, A is the quantity of add-drop channels, and one band corresponds to the plurality of microring filters. The filter unit 101 includes the (A*N) microring filters. The input port of the third band pass combiner/splitter is the input port 103, and one output port of the third band pass combiner/splitter and one input port of the fourth band pass combiner/splitter correspond to A same microring filters. Each output port of the third band pass combiner/splitter is connected to an input port of a first microring filter in the A microring filters corresponding to the third band pass combiner/splitter. Each input port of the fourth band pass combiner/splitter is connected to an output port of an A^{th} microring filter in the A microring filters corresponding to the fourth band pass combiner/splitter. The output port of the fourth band pass combiner/splitter is the output port 104. In the corresponding A microring filters, an output port of an X^{th} microring filter is connected to an input port of an (X+1)^{th} microring filter, where X is an integer not less than 1.

In an embodiment, the filter unit is further configured to adjust a resonance wavelength of the first microring filter to be equal to a resonance wavelength of a second microring filter. The waveband multiplexer/demultiplexer unit is further configured to adjust a working band of a waveguide directional coupler corresponding to the first microring filter from a band corresponding to the first microring filter to a band corresponding to the second microring filter, to back up a target optical signal corresponding to the second microring filter by using the first microring filter. Both the first microring filter and the second microring filter may be one or more filters in the filter unit. For example, the filter unit includes eight microring filters (numbered 1 to 8). The first microring filter is an odd-numbered microring filter, and the second microring filter is an even-numbered microring filter.

The grating coupler includes but is not limited to a grating-assisted directional coupler and/or a grating-assisted contra-directional coupler. Specifically, all the grating couplers in the first grating coupling module may be grating-assisted directional couplers. Alternatively, all the grating couplers in the first grating coupling module may be grating-assisted contra-directional couplers. Alternatively, the two types of couplers are used together.

The band pass splitter includes but is not limited to a cascaded Mach-Zehnder interferometer and/or a wavelength-insensitive directional coupling element. The wavelength-insensitive directional coupling element includes but is not limited to a wavelength-insensitive power splitter (PS) and a wavelength-insensitive waveguide directional coupler. In addition, the PS may be a cascaded star splitter star splitter and a Y-branch splitter Y-branch.

Optionally, the microring filter may be a microring add/drop filter (ADF) with a tunable coupler (TC). Compared with a common ADF, the ADF with the TC is different in that the ADF can be controlled to be in a working or an offline state by using the TC. In the working state, the ADF generates a filter effect on an optical signal input into the ADF. Specifically, the ADF filters, to a microring, an optical signal whose wavelength is equal to a resonance wavelength of the microring in the input optical signal, so that the optical signal can be coupled from one waveguide to another waveguide. For example, an input-output waveguide is coupled to an add-drop waveguide, and/or the add-drop waveguide is coupled to the input-output waveguide. In the offline state, the ADF does not filter the optical signal input into the ADF. It should be noted that one port of the input-output waveguide is the input port 103, and the other port is the output port 104. One port of the add-drop waveguide is the add port 105, and the other port is the drop port 106.

In this embodiment of this application, different bands are divided, and microring filters corresponding to different bands in the filter unit are used for filtering. It should be understood that band division may reduce a band range corresponding to each band. In this case, when optical signals in respective bands are filtered by using respective microring filters, a requirement on an FSR of the microring filter may be reduced. The OADM may use a microring filter with a relatively large microring radius, to reduce manufacturing difficulty of the microring filter, and improve reliability of the optical add/drop multiplexer apparatus.

The following describes in detail the OADM apparatus provided in this embodiment of this application from the plurality of OADM design manners mentioned above.

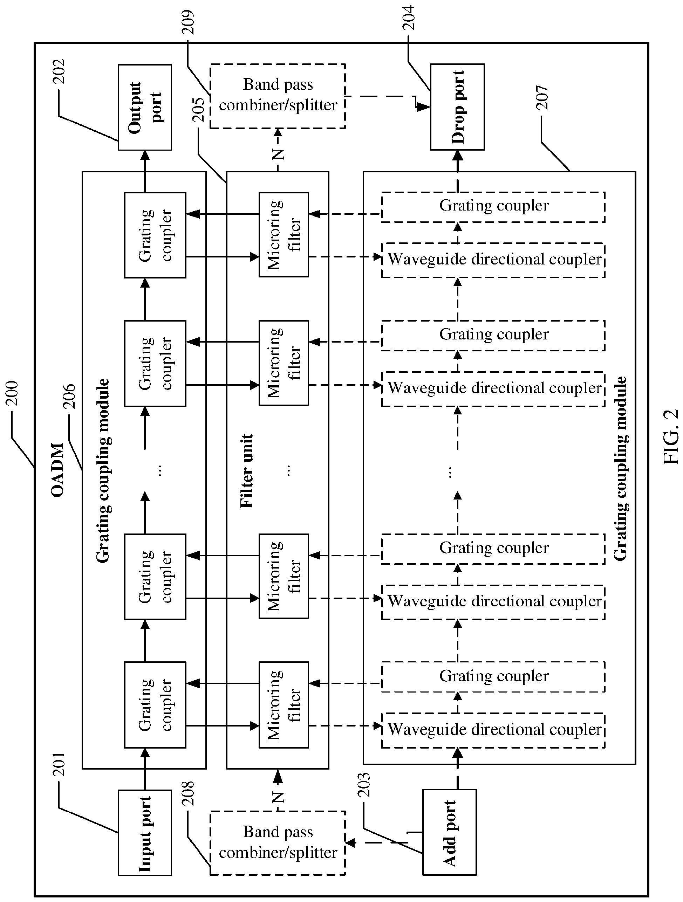

FIG. 2 is a schematic diagram of a structure of a first OADM and a second OADM according to an embodiment of this application.

In a first OADM architecture, a serial solution design is used for an input-output port and an add-drop port. Specifically, an add-drop port in an OADM includes a grating coupler and a directional waveguide coupler, and an input-output port of the OADM includes a grating coupler. In a second OADM architecture, the serial solution design is used for the input-output port, and a parallel solution design is used for the add-drop port. Specifically, the add-drop port of the OADM is formed by the grating coupler and the directional waveguide coupler, and the input-output port of the OADM is formed by a band pass combiner/splitter.

In one aspect, the OADM 200 in the first OADM architecture includes an input port 201, an output port 202, an add port 203, a drop port 204, a filter unit 205, a grating coupling module 207, and a grating coupling module 206. The grating coupling module 206 includes a plurality of grating couplers. The grating coupling module 207 includes a plurality of grating couplers and a waveguide directional coupler.

Correspondingly, the waveband multiplexer/demultiplexer unit 102 in FIG. 1 may specifically include the grating coupling module 206 and the grating coupling module 207 shown in FIG. 2. A quantity of grating couplers in the grating coupling module 206 is equal to a quantity of divided bands. The grating coupling module 206 is the second grating coupling module in the waveband multiplexer/demultiplexer unit 102 in FIG. 1. A quantity of grating couplers in the grating coupling module 207 is equal to a quantity of waveguide directional couplers, and is equal to a quantity of microring filters in the filter unit 205. The grating coupling module 207 is the first grating coupling module in the waveband multiplexer/demultiplexer unit 102 in FIG. 1.

In another aspect, the OADM 200 in the second OADM architecture includes the input port 201, the output port 202, the add port 203, the drop port 204, the filter unit 205, the grating coupling module 206, a band pass combiner/splitter 208, and a band pass combiner/splitter 209.

Compared with the first OADM architecture, the second OADM architecture is different in that: The waveband multiplexer/demultiplexer unit 102 in FIG. 1 specifically includes the grating coupling module 206 shown in FIG. 2, the band pass combiner/splitter 208, and the band pass combiner/splitter 209. A quantity of output ports of the band pass combiner/splitter 208 and a quantity of input ports of the band pass combiner/splitter 209 are both equal to the quantity of divided bands. A quantity of the band pass combiners/splitters 208 and a quantity of the band pass combiners/splitters 209 are both equal to a quantity of add-drop channels. The band pass combiner/splitter 208 is the third band pass combiner/splitter located at the add port of the waveband multiplexer/demultiplexer unit 102 in FIG. 1. The band pass combiner/splitter 209 is the fourth band pass combiner/splitter located at the drop port of the waveband multiplexer/demultiplexer unit 102 in FIG. 1.

In the first OADM architecture, for a connection relationship between the add port 203 and the drop port 204, refer to related descriptions in the embodiment in which the add port and the drop port use the grating coupler and the directional waveguide coupler in FIG. 1. Details are not described herein again. Similarly, in the second OADM architecture, for a connection relationship between the add port 203 and the drop port 204, refer to related descriptions in the embodiment in which the add port and the drop port use the band pass combiner/splitter. Details are not described herein again.

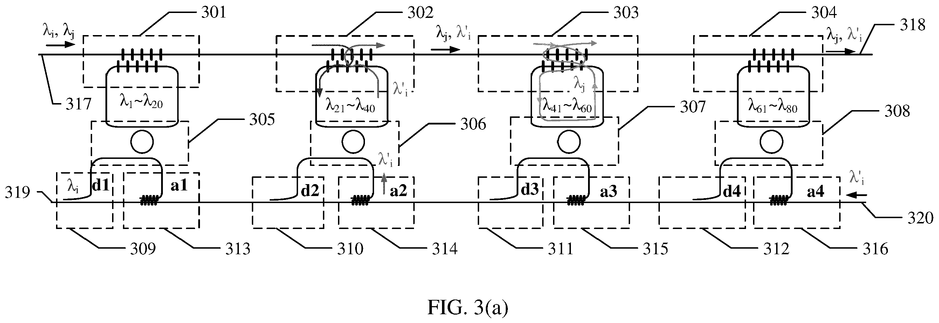

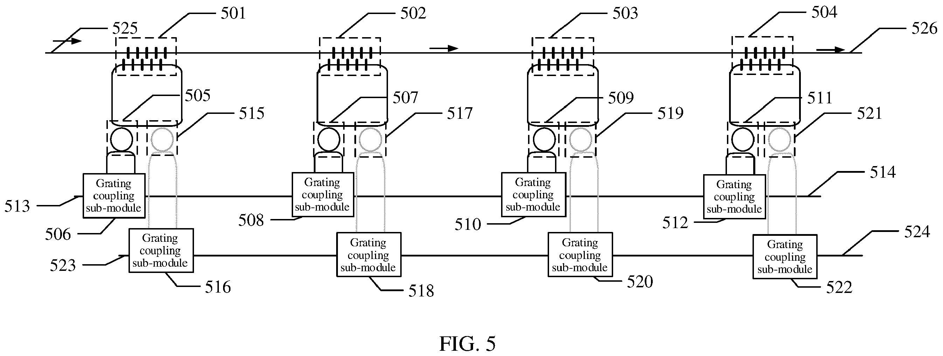

In the foregoing two architectures, connection manner between the input port 201 and the output port 202 may be specifically the single-channel and multi-channel serial connection manner described in FIG. 1. In the single-channel serial connection manner, the quantity of microring filters in the filter unit 205 is equal to the quantity N of bands. In the multi-channel serial connection manner, the quantity of microring filters in the filter unit 205 is A times the quantity of bands, where A is an integer greater than 1. Single-channel and multi-channel refer to one or more add-drop channels. A change in the quantity of add-drop channels does not lead to a change in a structure of each add-drop channel, but leads to a difference in a connection structure between the add-drop channel and an input-output channel. For details, refer to related descriptions in the embodiments in FIG. 3(a) and FIG. 5. Details are not described herein again.

Based on the two OADM architectures shown in FIG. 2, the following separately describes the first and the second OADM architectures in the embodiments of this application by using a tunable optical add/drop multiplexer (TOADM) as an example. The OADM architectures use an ADF with a tunable coupler TC to divide a C band in a 32 nm wavelength range.

FIG. 3(a) is a schematic diagram of a structure of a single-channel TOADM apparatus in a first OADM architecture according to an embodiment of this application. As shown in FIG. 3(a), the TOADM includes grating-assisted directional couplers (GADC) 301 to 304, 313 to 316, ADFs 305 to 308, waveguide directional couplers 309 to 312, an input port 317, an output port 318, a drop port 319, and an add port 320.

The GADC has four ports (Gi, Gd, Go, and Ga). In the GADC, an optical path direction is as follows: A signal is input from Gi, a signal whose signal wavelength is in a GADC band range is transmitted to Gd, and other optical signals are transmitted to Go. A signal is input from the Ga, a signal whose signal wavelength is in the GADC band range is transmitted to Go, and other signals are transmitted to Gd.

In FIG. 3(a), a C band in a 32 nm wavelength range is divided into four sub-bands at a granularity of 0.1 nm. Each sub-band includes optical signals of 20 wavelengths, and the four sub-bands separately correspond to the ADFs 305 to 308.

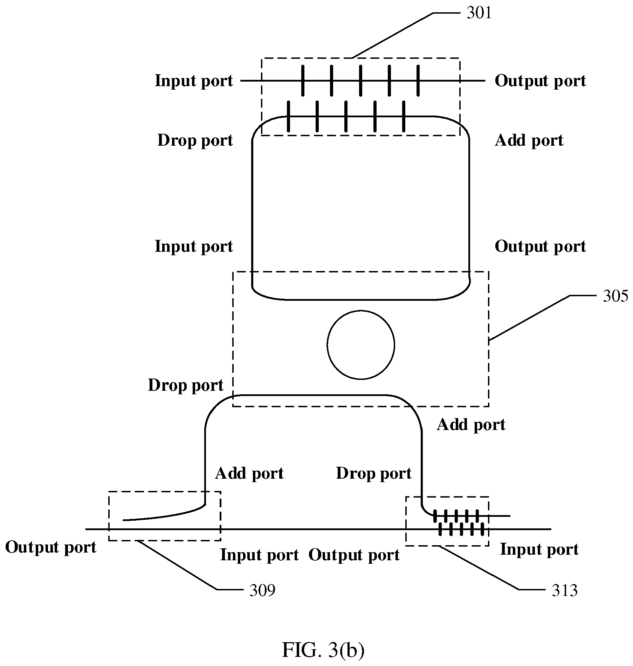

To describe a connection structure of the TOADM in FIG. 3(a), FIG. 3(b) shows connection relationships between the GADC 301, the GADC 313, the ADF 305, and the waveguide directional coupler 309. A drop port of the GADC 301 is connected to an input port of the ADF 305, an add port of the GADC 301 is connected to an output port of the ADF 305, an add port of the ADF 305 is connected to a drop port of the GADC 313, a drop port of the ADF 305 is connected to an add port of the GADC 313, and an output port of the GADC 313 is connected to an input port of the waveguide directional coupler 309. Each group of connection structures shown in FIG. 3(b) of the tunable optical add/drop multiplexer TOADM in FIG. 3(a) may be considered as one group of add-drop sub-optical paths, and four groups of sub-optical paths form one add-drop port of the optical add/drop multiplexer. Working principles of drop, add, and pass-through processes of the optical add/drop multiplexer are as follows.

Drop process: A to-be-dropped signal λᵢ entering from the input port 317 is transmitted along an input-output waveguide. It is assumed that λᵢ is in a wavelength selection range of the grating-assisted directional coupler 302, the signal λᵢ directly passes through the grating-assisted directional coupler 301, and enters a second group of add-drop sub-optical paths (namely, the ADF 306) through the grating-assisted directional coupler 302. The ADF 306 is in a working state, and a resonance wavelength of the ADF 306 is configured at λᵢ. The signal λᵢ is dropped by the ADF 306 to a port d2, and is transmitted to the drop port 319 along an add-drop waveguide. A wavelength selection range of the GADC 313 at a1 is the same as that of the GADC 301. The signal λᵢ passes through the GADC 313, and is output at the drop port 319. Because remaining wavelength signals that are in the wavelength selection range of the GADC 302 do not meet a resonance condition of the GADC 302, and therefore the remaining wavelength signals pass through the ADF 306, and are coupled back to the input-output waveguide by the GADC 302 for forward transmission.

Pass-through process: λⱼ enters from the input port 317. It is assumed that a band range of λⱼ corresponds to the band range of the GADC 303, a wavelength signal of λⱼ needs to pass through the current TOADM, and then go to a next station. The signal λⱼ passes through the GADCs 301 and 302, and enters a third group of add-drop sub-optical paths (namely, the ADF 307) through the GADC 303. In this case, the ADF 307 is configured to be in an offline "OFF" state, and the signal λⱼ directly passes through the ADF 307. After passing through the GADC 303, the signal returns to the input-output waveguide, directly passes through the GADC 304, and then is output from the output port 318.

Add process: A to-be-added signal λ'ᵢ enters from the add port 320. In the four groups of add-drop sub-optical paths, all aᵢ (i = 1, 2, 3, 4) ports use waveguide directional couplers having a same wavelength selection range as the GADC. Therefore, the signal λ'ᵢ directly passes through the GADCs 316 and 315, and is input to the second group of add-drop sub-optical paths by the GADC 314. The ADF306 is in the working state, and the resonance wavelength of the ADF 306 is configured at λᵢ. The signal λ'ᵢ is added by the ADF 306 and is output by the GADC 302 to the input-output waveguide for transmission toward the output port 318. Because λ'ᵢ is not in wavelength selection ranges of the GADCs 303 and 304, the signal λ'ᵢ directly passes through the GADCs 303 and 304, and is output from the output port 318.

The ADFs 305 to 308, the GADCs 309 to 312, and the waveguide directional couplers 313 to 316 together form one add-drop channel of the TOADM, which is used to add/drop a wavelength λₓ. Only one ADF corresponding to a band in which λₓ is located is in an ON state, and a resonance wavelength of the ADF is configured at λₓ. The other three ADFs are all in the OFF state. The ON/OFF state of the ADF and the resonance wavelength of the ADF in the ON state are changed to switch add/drop wavelengths.

It should be noted that the working state or the offline state of the ADF may be controlled by using an electro-optic effect or a thermo-optic effect. It should be further noted that, in FIG. 3(a), the GADCs 301 to 304 and the GADCs 313 to 316 are both GADCs. In some embodiments, all or some of the GADCs 301 to 304 and the GADCs 313 to 316 may be replaced with grating-assisted contra-directional couplers (GACDC). Working principles of the two grating couplers are the same. A connection structure of a replaced TOADM is similar to that in FIG. 3(a). Details are not described herein again. A difference lies in that positions of Ga and Gd of the replaced grating coupler are exchanged, and the direction of the optical path connected to the ports of the TOADM needs to be changed accordingly.

A wavelength selection range of the waveguide directional coupler is determined based on a grating structure. When the waveguide directional coupler works normally, there is no need to perform active switching control. However, if a thin film heater is used to heat a grating region of the waveguide directional coupler, a refraction coefficient of the waveguide directional coupler changes, and a working range of the waveguide directional coupler may be changed. The four groups of add-drop sub-optical paths shown in FIG. 3(a) in the waveguide directional coupler serve as mutual backup. If an ADF in one group of sub-optical paths fails, the working range of the waveguide directional coupler may be changed, so that the wavelength signal is transmitted through a backup sub-optical path, to implement backup with an ADF with a tunable resonance wavelength.

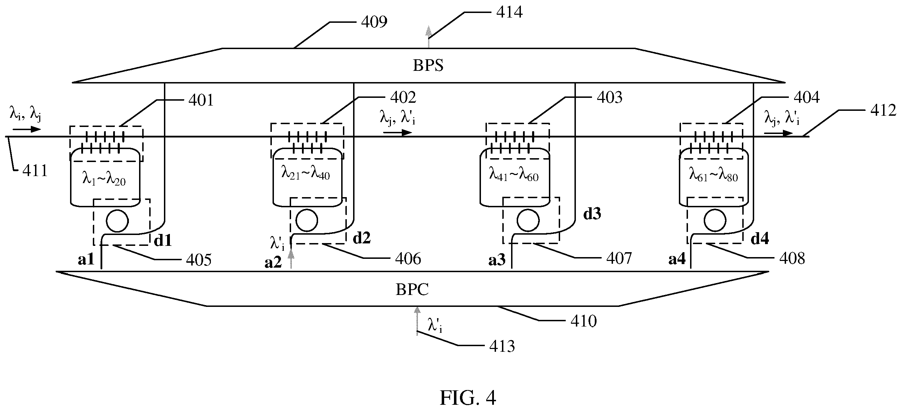

FIG. 4 is a schematic diagram of a structure of a single-channel TOADM apparatus in a second OADM architecture according to an embodiment of this application. The TOADM shown in FIG. 4 includes GADCs 401 to 404, ADFs 405 to 408, a band pass combiner (BPC) 409, a band pass splitter (BPS) 410, an output port 411, an output port 412, an add port 413, and a drop port 414.

Structures and functions of the grating-assisted directional couplers 401 to 404 and the microring add/drop filters 405 to 408 in the TOADM shown in FIG. 4 are separately similar to those of the grating-assisted directional couplers 301 to 304 and the microring add/drop filters 305 to 308 in the foregoing embodiment in FIG. 3(a). For related descriptions, refer to related descriptions in FIG. 3(a). This is not limited herein.

Compared with the single-channel TOADM in the first OADM architecture shown in FIG. 3(a), the single-channel TOADM in the second OADM architecture shown in FIG. 4 uses the BPC and the BPS on an add-drop channel, instead of a directional coupling element such as a grating coupler. The BPC 409 in FIG. 4 is configured to combine four optical signals d1 to d4 at a drop port of the ADF, and output the combined optical signals from the drop port 414. The BPS 410 is configured to split optical signals at the add port 413 into four optical signals a1 to a4. The BPC 409 and the BPS 410 may be cascaded Mach Zehnder interferometer MZIs or wavelength-insensitive directional coupling elements.

FIG. 5 is a schematic diagram of a structure of a two-channel TOADM apparatus in a first OADM architecture according to an embodiment of this application. The TOADM shown in FIG. 5 includes: GADCs 501 to 504, ADFs 505 to 512, grating coupling sub-modules 513 to 520, add ports 521 and 523, drop ports 522 and 524, an input ports 525, and an output port 526. Positions of the add port 521 and the drop port 522 may be exchanged based on an optical path direction, and positions of the add port 523 and the drop port 524 may also be exchanged. Each grating coupling sub-module includes one GADC and one waveguide directional coupler. A connection structure between each grating coupling sub-module and the add port and the drop port is the same as a connection structure of the add port 319 and the drop port 320 in FIG. 3(a). Details are not described herein again.

The TOADM shown in FIG. 5 is a TOADM extending from a single channel to two channels based on the TOADM structure in FIG. 3(a). Specifically, in the TOADM in FIG. 5, one band corresponds to two ADFs, which are separately configured to filter two optical signals with different wavelengths in a band.

Optionally, the two channels in the two-channel TOADM may be mutual backup channels. Specifically, in FIG. 5, resonance wavelengths of the microring add/drop filters 505 and 506 are equal, resonance wavelengths of the microring add/drop filters 507 and 508 are equal, resonance wavelengths of the microring add/drop filters 509 and 510 are equal, and resonance wavelengths of the microring add/drop filters 511 and 512 are equal.

A difference from the single-channel TOADM shown in FIG. 3(a) lies in a connection manner between an ADF and a grating coupler at an input-output port. The GADC 501, the ADF 505, and the ADF 506 are used as an example. A drop port of the GADC 501 is connected to an input port of the ADF 505, an add port of the GADC 501 is connected to an output port of the ADF 506, and an output port of the ADF 505 is connected to an input port of the ADF 506.

It should be noted that the multi-channel TOADM in FIG. 5 is similar to the single-channel TOADM in FIG. 3(a). For other descriptions, refer to the related descriptions of the single-channel TOADM in FIG. 3(a). Details are not described herein again.

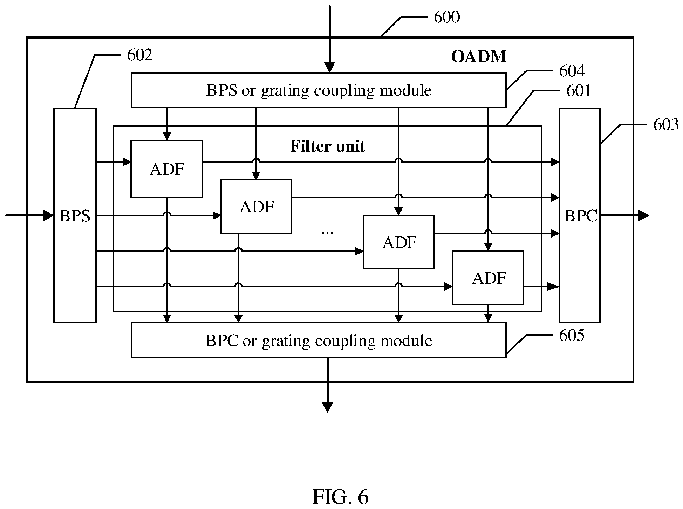

FIG. 6 is a schematic diagram of a structure of a third OADM and a fourth OADM according to an embodiment of this application.

A third OADM architecture is an OADM architecture in which a parallel structure is used at both an input-output port and an add-drop port. Specifically, both the add-drop port and the input-output port in the OADM are designed in parallel by using a band pass combiner/splitter. In a fourth OADM architecture, a parallel design is used at the input-output port, a serial design is used at the add-drop port. Specifically, the input-output port of the OADM includes the band pass combiner/splitter, and the add-drop port of the OADM includes a grating coupler and a directional waveguide coupler.

In a possible implementation, the OADM 600 shown in FIG. 6 includes a filter unit 601, a BPS 602, a BPC 603, a BPS 604, and a BPC 605. A connection relationship between each component is shown in FIG. 6. The filter unit 601 includes a plurality of ADFs.

In another possible implementation, the OADM 600 shown in FIG. 6 includes the filter unit 601, the BPS 602, the BPC 603, a grating coupling module 604, and a grating coupling module 605. Structures of the grating coupling module 604 and the grating coupling module 605 are similar to those of the first grating coupling module in FIG. 1. Details are not described herein again.

The BPS 602 is configured to split an optical signal at an input port of the OADM 600, and output the split optical signal to each ADF in the filter unit 601. The BPS 604 or the grating coupling module 604 is configured to perform a same operation as the BPS 602 on an optical signal of an add port of the OADM 600. The BPC 603 is configured to combine the optical signals at output ports of the ADFs in the filter unit 601, and output the combined optical signals to the output port of the OADM 600. The BPC 605 or the grating coupling module 605 is configured to perform a same operation as the BPC 603 on optical signals at drop ports of the ADFs in the filter unit 601.

In the third OADM architecture, for a connection relationship between the add-drop ports, refer to the related description of the parallel solution used at the add-drop port in FIG. 1. Details are not described herein again. Similarly, in the fourth OADM architecture, for a connection relationship between the add-drop ports, refer to related descriptions of the serial solution used at the add-drop port in FIG. 1. Details are not described herein again.

In the third OADM architecture and the fourth OADM architecture, the foregoing single-channel or multi-channel parallel solution design may be used at the input-output port. In the single-channel parallel solution design, a quantity of ADFs in the filter unit 601 is equal to a quantity N of bands. In the multi-channel parallel solution design, a quantity of ADFs in the filter unit 601 is equal to A times the quantity N of bands. Based on the third OADM architecture and the fourth OADM architecture shown in FIG. 6, the following uses a TOADM as an example for description. The OADM architectures use a TC-controlled ADF to divide a C band in a 32 nm wavelength range.

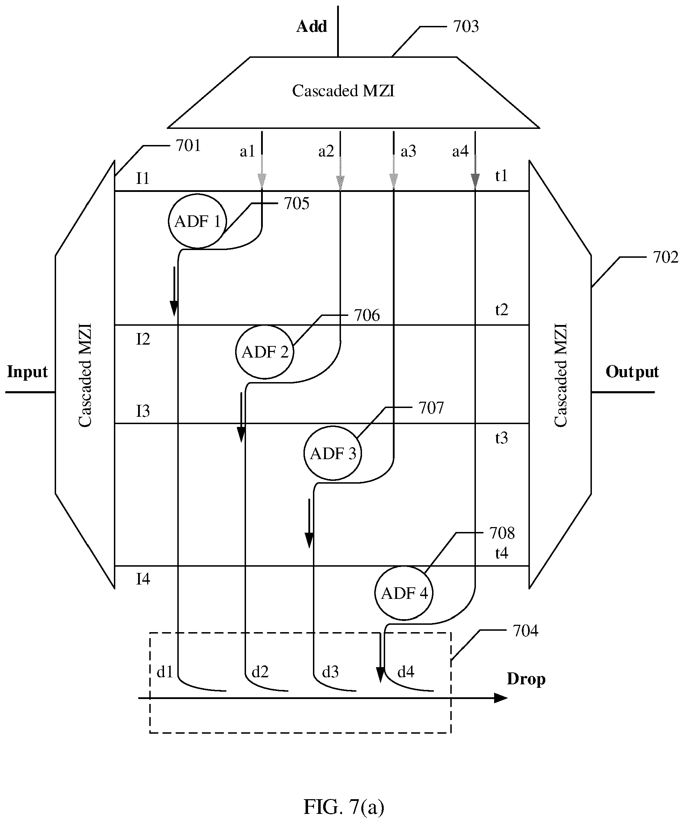

FIG. 7(a) is a schematic diagram of a structure of a single-channel TOADM apparatus in a third OADM architecture according to an embodiment of this application. The TOADM shown in FIG. 7(a) includes cascaded MZIs 701 to 703, a directional coupling module 704, and ADFs 705 to 708. The ADFs 705 to 708 are denoted as ADF 1 to ADF 4 respectively.

Optionally, the cascaded MZI 701 to 702 use the same design.

Optionally, the directional coupling module 704 includes four wavelength-insensitive waveguide directional couplers. Wavelength insensitivity means that coupling strength of a waveguide directional coupler is independent of a wavelength.

Similar to FIG. 3(a), a connection structure corresponding to each ADF of the TOADM in FIG. 7(a) may be considered as one group of add-drop sub-optical paths, and four groups of sub-optical paths form one add-drop channel or one add-drop port of an optical add-drop multiplexer.

As shown in FIG. 7 (a), working principles of drop, add, and pass-through processes of the TOADM are as follows.

Drop process: A to-be-dropped signal λᵢ is input at an input port of the TOADM, and the cascaded MZI 701 transmits the signal to a corresponding port in I1 to 14 based on different wavelength bands of the signal. It is assumed that λᵢ is transmitted to 12, the ADF 2 is configured to be in an ON state and drop a wavelength signal λᵢ, and the wavelength signal λᵢ is output to a drop port of the TOADM through the waveguide directional coupler at d2.

Pass-through process: A signal λⱼ is input at the input port of the TOADM, and it is assumed that a wavelength band of the signal λⱼ corresponds to the port 13, and the wavelength signal λⱼ needs to pass through the current TOADM, and then go to a next station. In this case, the ADF 3 is configured to be in an OFF state, and λⱼ is directly transmitted to t3 by using an input-output waveguide. A design of the cascaded MZI 702 is the same as that of the cascaded MZI 701. Only input ports and output ports are exchanged. Therefore, the cascaded MZI 702 and the cascaded MZI 701 have a same band division feature. A waveband range corresponding to a port t3 is the same as that of the port I3. Therefore, when λⱼ is input from t3 to the cascaded MZI 702, λⱼ is converged to a port O of the TOADM for output.

Add process: A to-be-added signal λ'ᵢ is input at an add port of the TOADM. A design of the cascaded MZI 703 is the same as that of the cascaded MZI 701. λ'ᵢ is transmitted to a port a2 connected to the ADF 2, and is added to a waveguide 12-12 and transmitted to the port t2 through the ADF 2 that is in the ON state. Finally, λ'ᵢ is finally output by the cascaded MZI 702 to an output port of the TOADM.

In this embodiment of this application, the ADFs 1 to 4, the cascaded MZI 703, and the four waveguide directional couplers form one group of add-drop ports that are jointly configured to add and/or drop a wavelength λₓ in a working range of the TOADM. During working, only an ADFₖ (k=1, 2, 3, 4) corresponding to a waveband at which λₓ is located is in the working (ON) state, and a resonance wavelength is configured at λₓ. The other three ADFs are all in the OFF state. The ON/OFF state of the ADF and the resonance wavelength of the ADF in the ON state are changed to add/drop signals of different wavelengths.

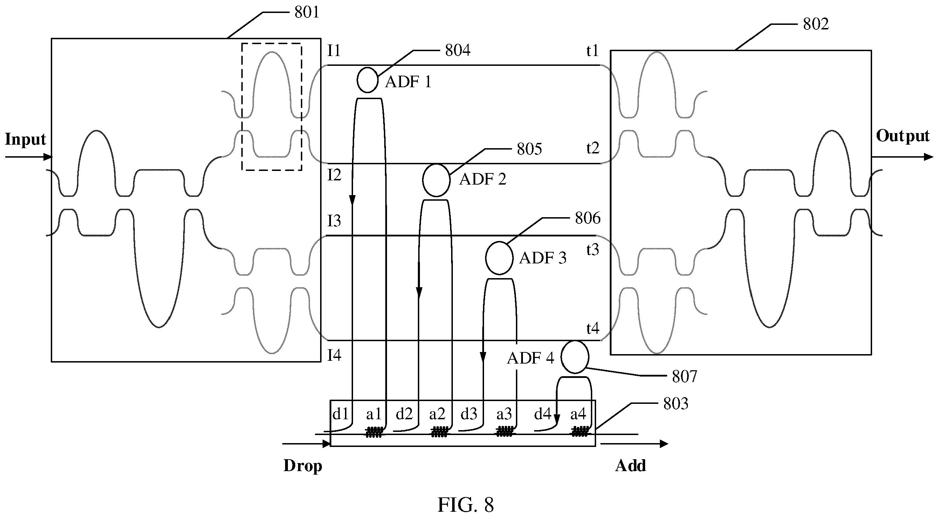

It should be noted that, the cascaded MZI in FIG. 7(a) may also be replaced by another band pass device having a similar function. This is not limited herein. In addition, for a structure of the cascaded MZIs 701 to 703, refer to the cascaded structures of the MZI in FIG. 8. Details are not described herein again.

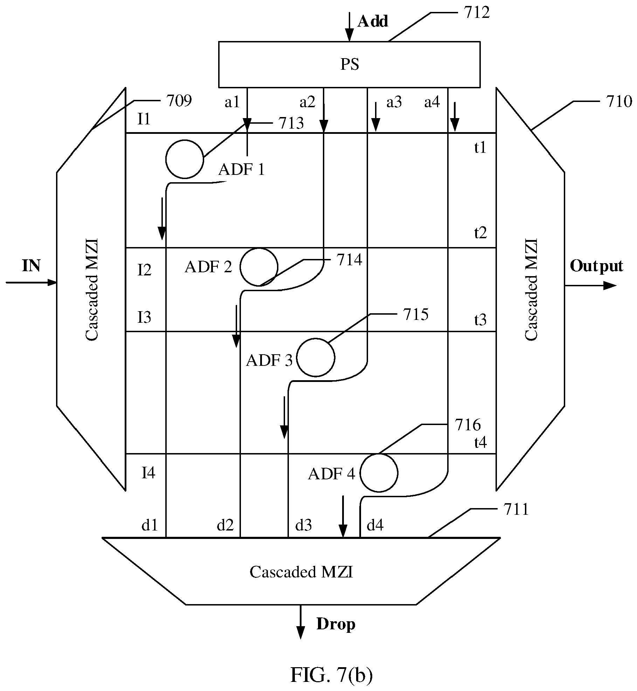

FIG. 7(b) is another schematic diagram of a structure of a single-channel TOADM apparatus in a third OADM architecture according to an embodiment of this application. The TOADM shown in FIG. 7(b) includes cascaded MZIs 709 to 711, 1x4 PS 712, and ADFs 713 to 716. The ADFs 713 to 716 are denoted as ADFs 1 to 4.

Optionally, the ADFs 1 to 4 may be microring filters with two TCs.

Compared with FIG. 7(a), a main difference of the TOADM in FIG. 7(b) lies in that cascaded MZIs with a same design are used as the band pass combiners/splitters at the input port, the output port, and the drop port, and a wavelength-insensitive power splitter (PS) is used at the add port. Specifically, the PS includes but is not limited to a cascaded star splitter (SS) and a Y-branch splitter (YB). For specific structures of the foregoing two splitters, refer to other related documents. Details are not described herein again.

A pass-through process of the TOADM in FIG. 7(b) is the same as that in FIG. 7(a). Details are not described herein again. Working principles of add and drop processes of the TOADM in FIG. 7 (b) are as follows:
Drop process: The to-be-dropped signal λᵢ is input at the input port of the TOADM, and the cascaded MZI 709 transmits the signal to the corresponding port in I1 to I4 based on the different wavelength bands of the signal. It is assumed that λᵢ is transmitted to I2, the ADF 2 is configured to be in the ON state and drop the wavelength λᵢ, and the wavelength signal λᵢ is input to the cascaded MZI 711 through the port d2 and is combined to the drop port of the TOADM.
Add process: A to-be-added signal λ'ᵢ is input at an add port of the TOADM. The 1x4 PS 712 splits the signal to four optical signals a1 to a4. When the signal passes through each ADF, the ADF 2 is in the ON state and the resonance wavelength is λᵢ. A wavelength signal of the channel a2 is transmitted to t2 by using the ADF 2. The ADF 1, the ADF 3, and the ADF 4 are set to the OFF state by the two TCs. Wavelength signals is directly transmitted to d1, d3, and d4 without being affected by the ADFs 1 to 3. However, the wavelength λᵢ is in a waveband range corresponding to the port d2, the signal λ'ᵢ cannot be output from three ports d1, d3, and d4 to the drop port of the TOADM through the cascaded MZI. The wavelength signals in the three channels are radiated and consumed by idle ports in the cascaded MZI, but do not enter the drop port of the TOADM to generate crosstalk on the dropped wavelength signal λᵢ. As shown in FIG. 8, unused MZI ports in the cascaded MZI are the idle ports.

In this embodiment of this application, the ADFs 1 to 4, the 1x4 PS 712, and the cascaded MZIs 711 form one group of add/drop ports that are jointly configured to add/drop the wavelength λₓ. Only the ADFₖ (k=1, 2, 3, 4) corresponding to the waveband in which λₓ is located is in the ON state and the resonance wavelength is configured at λₓ. The other three ADFs are all in the OFF state. The ON/OFF state of the ADF and the resonance wavelength of the ADF in the ON state are changed to switch add/drop wavelengths.

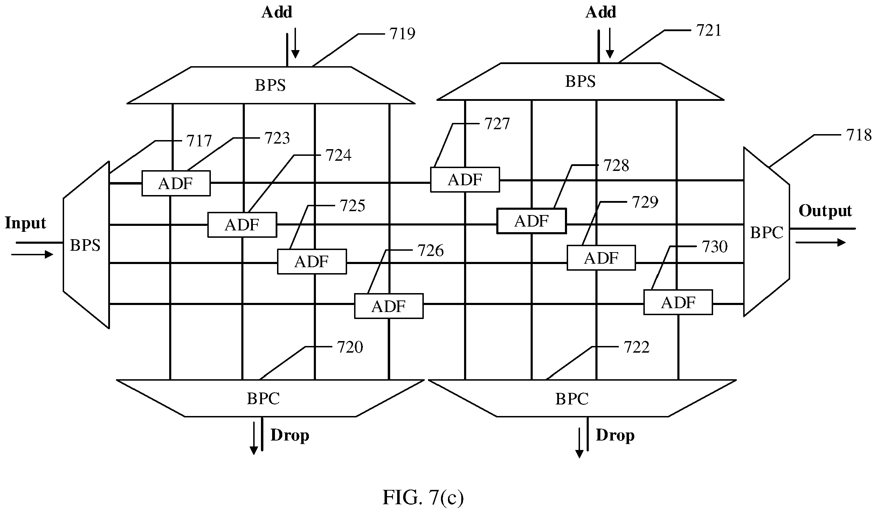

FIG. 7(c) is a schematic diagram of a structure of a two-channel TOADM in a third OADM architecture according to an embodiment of this application. The TOADM shown in FIG. 7(c) includes a BPS 717, a BPS 719, a BPS 721, a BPC 718, a BPC 720, a BPC 722, and ADFs 723 to 730. The BPS 717 and the BPC 718 are separately located at an input port and an output port of the TOADM. The BPS 719 and the BPC 720 form one add-drop port of the TOADM. The BPS 721 and the BPC 722 form the other add-drop port of TOADM.

Compared with FIG. 7(a) and FIG. 7(b), a main difference in FIG. 7(c) lies in that after being connected in series with each other, microring add/drop filters corresponding to sub-optical paths corresponding to each add-drop channel are separately connected to band pass combiners/splitters at an input port and an output port. For example, an output port of the BPS 717 is connected to an input port of the ADF 723, an output port of the ADF 723 is connected to an input port of the ADF 724, and an output port of the ADF 724 is connected to an input port of the BPC 718.

The add-drop channel formed by the BPS 719 and the BPC 720 in FIG. 7(c) may use the structure of the add-drop channel shown in FIG. 7(a) or FIG. 7(b). The add-drop channel formed by the BPS 721 and the BPC 722 may also be the structure of the add-drop channel shown in FIG. 7(a) or FIG. 7(b).

FIG. 8 is a schematic diagram of a structure of a TOADM apparatus in a fourth OADM architecture according to an embodiment of this application. The TOADM shown in FIG. 8 includes cascaded MZIs 801 and 802, a second grating coupling module 803, and ADFs 804 to 807. Both the cascaded MZI 801 and the cascaded MZI 802 are obtained by cascading four MZIs. Dashed lines in FIG. 8 shows one MZI. It can be learned from FIG. 8 that there are MZIs with varied length differences between an upper arm and a lower arm in the four MZIs.

It should be noted that the technical solution in FIG. 8 is similar to the solution shown in FIG. 4. FIG. 4 is a structure of an input-output port in an integrated serial solution, and is obtained by using a structure of an add-drop port in a parallel solution. However, FIG. 8 is a structure of an add-drop port in the integrated serial solution, and is obtained by using a structure of an input-output in the parallel solution. Therefore, for an input-output port formed by the cascaded MZI 801 and the cascaded MZI 802 in FIG. 8, refer to related descriptions in FIG. 1, FIG. 6, FIG. 7(a), FIG. 7(b), and FIG. 7(c). For an add-drop port formed by the second grating coupling module 803, refer to descriptions of the parallel solution in FIG. 1, FIG. 2, FIG. 3(a), FIG. 4, and FIG. 5. Details are not described herein again.

In all parallel solutions described in the embodiments of this application, one add-drop channel is used as an example. It is clearly that a parallel technical solution with a plurality of add-drop channels may be further obtained according to the embodiments of this application, and may also fall within the protection scope of this application. This is not limited herein in this application.

In this embodiment of this application, it should be noted that, for both the TOADM structure and the connection manner in the embodiments corresponding to FIG. 2 to FIG. 8, refer to related descriptions in the embodiments corresponding to FIG. 1. Details are not described herein again.

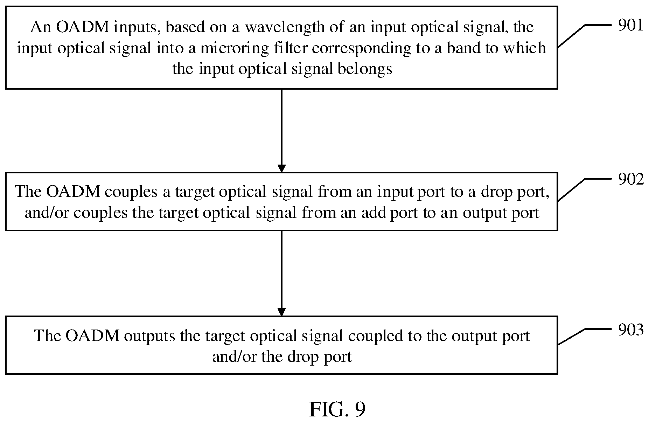

FIG. 9 is a schematic flowchart of an OADM control method according to an embodiment of this application. As shown in FIG. 9, the OADM control method in this embodiment of this application includes the following steps.

901: An OADM inputs, based on wavelength of one or more input optical signals, the one or more input optical signals into a microring filter corresponding to a band to which the one or more input optical signals belong.

One band corresponds to one or more microring filters, where "more" means two or more, and each microring filter has a different resonance wavelength. The one or more input optical signals may include an optical signal input from an input port. Alternatively, the one or more input optical signals may include an optical signal input from an add port. Alternatively, the one or more input optical signals may include an optical signal input from both the input port and the add port.

Optionally, the microring filter may be a microring add/drop filter with a tunable coupler. This type of microring add/drop filter may adjust a state (a working state and an offline state) of the microring add/drop filter by using the tunable coupler, to flexibly control the microring add/drop filter. In addition, a working band range of the microring add/drop filter may be changed by switching between the working state and the offline state.

902: The OADM couples a target optical signal from the input port to a drop port, and/or couples the target optical signal from the add port to an output port.

The target optical signal is an optical signal whose wavelength is equal to a resonance wavelength of the microring filter in the input optical signal. Specifically, in an add process, the OADM filters and obtains the target optical signal whose wavelength is equal to the resonance wavelength of the microring filter from the optical signal input at the add port, and transmits the target optical signal to the output port, to transmit the target optical signal to a next station. For example, a next OADM. In an drop process, the OADM filters and obtains the target optical signal whose wavelength is equal to the resonance wavelength of the microring filter from the optical signal input at the input port, and transmits the target optical signal to the drop port, and the to-be-dropped optical signal output by the foregoing station (for example, an optical signal receiver) is dropped. The add process and the drop process may be performed separately or simultaneously. This is not limited in this application.

Optionally, if the microring filter is the microring add/drop filter with the tunable coupler, the foregoing add process and/or drop process may be specifically implemented by using the tunable coupler to control the microring add/drop filter to be in the working state.

903: The OADM outputs the target optical signal coupled to the output port and/or the drop port.

In the add process, the OADM outputs the target optical signal input from the add port, namely, a to-be-added optical signal, to the output port. In the drop process, the target optical signal input by the OADM from the input port, namely, a to-be-dropped signal, is output to the drop port.

In some implementations, the OADM adjusts a resonance wavelength of a first microring filter to be equal to a resonance wavelength of a second microring filter. The OADM adjusts a working band of a second coupler corresponding to the first microring filter to a band corresponding to the first microring filter to a band corresponding to the second microring filter, to back up a target optical signal corresponding to the second microring filter by using the first microring filter. Both the first microring filter and the second microring filter may be one or more filters in a filter unit.

In some implementations, the microring filter is the microring add/drop filter with the tunable coupler. The OADM controls the microring add/drop filter to be in the offline state by using the tunable coupler, couples the input optical signal from the input port to the output port, or couples the input optical signal from the add port to the drop port. The OADM outputs the input optical signal coupled to the output and/or the drop port.

In some implementations, the OADM may further switch between different wavelengths in a band corresponding to a same microring filter. Specifically, the microring filter is the microring add/drop filter with the tunable coupler. The OADM controls the microring filter to be in the offline state, adjusts a resonance wavelength of the microring filter from a first wavelength to a second wavelength, and controls the microring filter to be in the working state after the adjustment is completed. Both the first wavelength and the second wavelength belong to the band corresponding to the microring filter.

In some implementations, the OADM may further switch between wavelengths in bands corresponding to different microring filters. Specifically, the microring filter is the microring add/drop filter with the tunable coupler. The OADM controls a third microring filter to be in the offline state, where a resonance wavelength of the third microring filter is the first wavelength. The OADM controls a fourth microring filter to be in the offline state, and configures a resonance wavelength of the fourth microring filter as the second wavelength. The OADM keeps the third microring filter in the offline state, and switches the fourth microring filter to the working state.

It should be noted that the offline state or the working state of the microring add/drop filter with the tunable coupler may be controlled by using an electro-optic effect or a thermo-optic effect. This is not limited in this application.

It should be noted that the OADM may be a three-port apparatus having only a drop function, or a three-port apparatus having only an add function, or a four-port apparatus having both the add function and the drop function.

Other operations and beneficial effects of the OADM control method in this embodiment of this application are consistent with those of the optical add/drop multiplexer in FIG. 1 to FIG. 8. The OADM control method in this embodiment of this application is applicable to all modules and components in FIG. 1 to FIG. 8, to implement functions of all the modules and components. Details are not described herein again.

An embodiment not according to the claimed invention further provides an integrated optical chip. The OADM described in any one of the embodiments in FIG. 1 to FIG. 8 is integrated into the integrated optical chip. In a design, the integrated optical chip may be integrated into a system-on-a-chip SoC.

The foregoing describes in detail the OADM and the control method thereof provided in the embodiments of this application. The principle and implementations of this application are described in this specification through specific examples. The descriptions about the embodiments are merely provided to help understand the methods and core ideas of this application. Therefore, the content of this specification shall not be construed as a limitation to this application.

## Claims

1. An optical add/drop multiplexer apparatus (100, 200), wherein the optical add/drop multiplexer apparatus is an integrated optical chip, and the optical add/drop multiplexer apparatus comprises an input port (103, 201, 317, 525), an output port (104, 202, 318, 526), an add port (105, 203, 320, 521, 523) and/or a drop port (106, 204, 319, 522, 524), a filter unit (101, 205), and a waveband multiplexer/demultiplexer unit (102), wherein
the filter unit (101, 205) comprises a plurality of microring filters, the filter unit (101, 205) is connected to the waveband multiplexer/demultiplexer unit (102), and the waveband multiplexer/demultiplexer unit is separately connected to the input port (103, 201, 317, 525), the output port (104, 202, 318, 526), the add port (105, 203, 320, 521, 523), if present, and the drop port (106, 204, 319, 522, 524), if present;
the waveband multiplexer/demultiplexer unit (102) is configured to input, based on wavelength of one or more input optical signals, the one or more input optical signals into a microring filter corresponding to a band to which the one or more input optical signals belong, wherein one band corresponds to at least one microring filter, each microring filter has a different resonance wavelength, and the one or more input optical signals comprise an optical signal at the input port (103, 201, 317, 525) and/or the add port (105, 203, 320, 521, 523), if present;
the filter unit (101, 205) is configured to couple a target optical signal from the input port (103, 201, 317, 525) to the drop port (106, 204, 319, 522, 524), if present, and/or to couple a target optical signal from the add port (105, 203, 320, 521, 523), if present, to the output port (104, 202, 318, 526), wherein the target optical signal is an optical signal, whose wavelength is equal to a resonance wavelength of the microring filter, in the input optical signal; and
the waveband multiplexer/demultiplexer unit (102) is further configured to output the target optical signal coupled to the output port (104, 202, 318, 526) and/or the drop port (106, 204, 319, 522, 524), if present.

2. The apparatus (100, 200) according to claim 1, wherein the microring filter has a tunable coupler, and the filter unit (101, 205) is specifically configured to control, by using the tunable coupler, the microring filter to be in a working state, and couple the target optical signal from the input port (103, 201, 317, 525) to the drop port (106, 204, 319, 522, 524), if present, and/or couple the target optical signal from the add port (105, 203, 320, 521, 523), if present, to the output port (104, 202, 318, 526).

3. The apparatus (100, 200) according to claim 1 or 2, wherein the waveband multiplexer/demultiplexer unit (102) comprises a first grating coupling module (207), the first grating coupling module (207) comprises a grating coupler and a waveguide directional coupler, and a quantity of grating couplers and a quantity of waveguide directional couplers are both Y, wherein Y is equal to (A*N), A is an integer not less than 1, N indicates a quantity of bands, and N is an integer not less than 2; and
in the first grating coupling module (207), a drop port of each grating coupler is connected to an add port of a corresponding microring filter, and an add port of each waveguide directional coupler is connected to a drop port of the corresponding microring filter; and an input port of the first grating coupler is the add port, an output port of an X^{th} grating coupler is connected to an input port of an X^{th} waveguide directional coupler, an output port of the X^{th} waveguide directional coupler is connected to an input port of an (X+1)^{th} grating coupler, and an output port of a Y^{th} waveguide directional coupler is the drop port, wherein X is a positive integer less than Y

4. The apparatus (100, 200) according to claim 1 or 2, wherein the waveband multiplexer/demultiplexer unit (102) comprises a first band pass combiner/splitter (208) and a second band pass combiner/splitter (209), a quantity of first band pass combiners/splitters (208) and a quantity of second band pass combiners/splitters (209) are both equal to A, wherein A is an integer not less than 1; each first band pass combiner/splitter (208) comprises one input port and N output ports, and each second band pass combiner/splitter (209) comprises N input ports and one output port; the one input port of the first band pass combiner/splitter (208) is one add port, and one output port of the first band pass combiner/splitter (208) is correspondingly connected to an add port of one microring filter; and the one output port of the second band pass combiner/splitter (209) is one drop port, and one input port of the second band pass combiner/splitter (209) is correspondingly connected to a drop port of the one microring filter, wherein N represents a quantity of bands, and N is an integer not less than 2.

5. The apparatus (100, 200) according to claim 3 or 4, wherein the waveband multiplexer/demultiplexer unit (102) further comprises a second grating coupling module (206), wherein the second grating coupling module comprises a grating coupler, and a quantity of grating couplers in the second grating coupling module is equal to the quantity N of bands; and
if A is equal to 1, one band corresponds to one microring filter, the filter unit (101, 205) comprises N microring filters, and one grating coupler in the second grating coupling module corresponds to one microring filter; a drop port of each grating coupler of the second grating coupling module (206) is connected to an input port of a corresponding microring filter, and an add port of each grating coupler is separately connected to an output port of the corresponding microring filter; and an input port of a first grating coupler (207) is the input port, an output port of an M^{th} grating coupler is coupled to an input port of an (M+1)^{th} grating coupler, and an output port of an N^{th} grating coupler is the output port, wherein M is an integer not greater than N.

6. The apparatus (100, 200) according to claim 3 or 4, wherein the waveband multiplexer/demultiplexer unit (102) further comprises a second grating coupling module (206), wherein the second grating coupling module (206) comprises a grating coupler, and a quantity of grating couplers in the second grating coupling module (206) is equal to the quantity N of bands; and
if A is an integer greater than 1, one band corresponds to the plurality of microring filters, the filter unit (101, 205) comprises (A*N) microring filters, and one grating coupler in the second grating coupling module (206) corresponds to A microring filters; in the second grating coupling module (206), a drop port of each grating coupler is separately connected to an input port of a first microring filter in the A corresponding microring filters, and an add port of each grating coupler is separately connected to an output port of an A^{th} microring filter in the A corresponding microring filters; an input port of a first grating coupler (207) is the input port, an output port of an M^{th} grating coupler is coupled to an input port of an (M+1)^{th} grating coupler, and an output port of an N^{th} grating coupler is the output port, wherein M is an integer not greater than N; and in the A microring filters corresponding to each grating coupler, an output port of an X^{th} microring filter is connected to an input port of an (X+1)^{th} microring filter, wherein X is an integer not less than 1.

7. The apparatus (100, 200) according to claim 3 or 4, wherein the waveband multiplexer/demultiplexer unit (102) further comprises a third band pass combiner/splitter and a fourth band pass combiner/splitter, wherein the third band pass combiner/splitter comprises one input port and N output ports, and the fourth band pass combiner/splitter comprises N input ports and one output port;
if A is equal to 1, one band corresponds to one microring filter, the filter unit (101, 205) comprises N microring filters, and the input port of the third band pass combiner/splitter is the input port; and the N output ports of the third band pass combiner/splitter are separately connected to input ports of the N microring filters, output ports of the N microring filters are separately connected to the N input ports of the fourth band pass combiner/splitter, and the output port of the fourth band pass combiner/splitter is the output port.

8. The apparatus (100, 200) according to claim 3 or 4, wherein the waveband multiplexer/demultiplexer unit (102) further comprises a third band pass combiner/splitter and a fourth band pass combiner/splitter, wherein the third band pass combiner/splitter comprises one input port and N output ports, and the fourth band pass combiner/splitter comprises N input ports and one output port;
if A is an integer greater than 1, one band corresponds to the plurality of microring filters, the filter unit (101, 205) comprises (A*N) microring filters; the input port of the third band pass combiner/splitter is the input port, one output port of the third band pass combiner/splitter and one input port of the fourth band pass combiner/splitter correspond to A same microring filters; each output port of the third band pass combiner/splitter is connected to an input port of a first microring filter in the A corresponding microring filters, each input port of the fourth band pass combiner/splitter is connected to an output port of an A^{th} microring filter in the A corresponding microring filters, and the output port of the fourth band pass combiner/splitter is the output port; and in the A corresponding microring filters, an output port of an X^{th} microring filter is connected to an input port of an (X+1)^{th} microring filter, wherein X is an integer not less than 1.

9. The apparatus (100, 200) according to any one of claims 1 to 8, wherein
the filter unit (101, 205) is further configured to adjust a resonance wavelength of the first microring filter to be equal to a resonance wavelength of a second microring filter; and
the waveband multiplexer/demultiplexer unit (102) is further configured to adjust a working band of a waveguide directional coupler corresponding to the first microring filter from a band corresponding to the first microring filter to a band corresponding to the second microring filter, to back up a target optical signal corresponding to the second microring filter by using the first microring filter, wherein both the first microring filter and the second microring filter may be one or more filters in the filter unit (101, 205).

10. The apparatus (100, 200) according to any one of claims 1 to 9, wherein
the add port (105, 203, 320, 521, 523), if present, or the drop port (106, 204, 319, 522, 524), if present, is connected to a wedge-shaped waveguide, or is connected to an anti-reflection waveguide or a blocking waveguide that is based on an absorbing material; or
a waveguide corresponding to the add port or the drop port of the microring filter is a wedge-shaped waveguide, or an anti-reflection waveguide or a blocking waveguide that is based on an absorbing material.

11. The apparatus (100, 200) according to any one of claims 3, 5 to 8, wherein the grating coupler comprises a grating-assisted directional coupler and/or a grating-assisted contra-directional coupler.

12. A control method for an optical add/drop multiplexer apparatus (100, 200), comprising:
Inputting (901), based on wavelength of one or more input optical signals, the one or more input optical signals into a microring filter of a plurality of microring filters
corresponding to a band to which the one or more input optical signals belong, wherein one band corresponds to at least one microring filter of the plurality of microring filters, and each microring filter has a different resonance wavelength, and the one or more input optical signals comprise an optical signal at an input port (103, 201, 317, 525) and/or an add port (105, 203, 320, 521, 523);
coupling (902) a target optical signal from the input port (103, 201, 317, 525) to a drop port (106, 204, 319, 522, 524), and/or coupling the target optical signal from the add port (105, 203, 320, 521, 523) to an output port (104, 202, 318, 526), wherein the target optical signal is an optical signal whose wavelength is equal to a resonance wavelength of the microring filter in the input optical signal; and
outputting (903) the target optical signal coupled to the output port (104, 202, 318, 526) and/or the drop port (106, 204, 319, 522, 524).

13. The method according to claim 12, wherein the microring filter has a tunable coupler, and the coupling a target optical signal from the input port (103, 201, 317, 525) to the drop port (106, 204, 319, 522, 524), and/or coupling a target optical signal from the add port (105, 203, 320, 521, 523) to the output port (104, 202, 318, 526) comprises:
controlling, by using the tunable coupler, the microring filter to be in a working state, and coupling the target optical signal from the input port (103, 201, 317, 525) to the drop port (106, 204, 319, 522, 524), and/or coupling the target optical signal from the add port (105, 203, 320, 521, 523) to the output port (104, 202, 318, 526).

14. The method according to claim 12 or 13, wherein the method further comprises:
adjusting a resonance wavelength of a first microring filter to be equal to a resonance wavelength of a second microring filter; and
adjusting a working band of a second coupler corresponding to the first microring filter from a band corresponding to the first microring filter to a band corresponding to the second microring filter, to back up a target optical signal corresponding to the second microring filter by using the first microring filter, wherein both the first microring filter and the second microring filter may be one or more filters in a filter unit (101, 205).

15. The method according to claim 13, wherein the method further comprises:
controlling, by using the tunable coupler, the microring filter to be in an offline state, and coupling the one or more input optical signals from the input port (103, 201, 317, 525) to the output port (104, 202, 318, 526), or coupling the one or more input optical signals from the add port (105, 203, 320, 521, 523) to the drop port (106, 204, 319, 522, 524); and
outputting the one or more input optical signals coupled to the output port (104, 202, 318, 526) and/or the (106, 204, 319, 522, 524) drop port.

## Patentansprüche

1. Optisches Add/Drop-Multiplexgerät (100, 200), wobei das optische Add/Drop-Multiplexgerät ein integrierter optischer Chip ist und das optische Add/Drop-Multiplexgerät einen Eingangsanschluss (103, 201, 317, 525), einen Ausgangsanschluss (104, 202, 318, 526), einen Add-Anschluss (105, 203, 320, 521, 523) und/oder einen Drop-Anschluss (106, 204, 319, 522, 524), eine Filtereinheit (101, 205) und eine Wellenband-Multiplex/Demultiplex-Einheit (102) umfasst, wobei
die Filtereinheit (101, 205) eine Vielzahl von Mikroringfiltern umfasst, die Filtereinheit (101, 205) mit der Wellenband-Multiplex/Demultiplex-Einheit (102) verbunden ist, und die Wellenband-Multiplex/Demultiplex-Einheit separat mit dem Eingangsanschluss (103, 201, 317, 525), dem Ausgangsanschluss (104, 202, 318, 526), dem Add-Anschluss (105, 203, 320, 521, 523), falls vorhanden, und dem Drop-Anschluss (106, 204, 319, 522, 524), falls vorhanden, verbunden ist;
die Wellenband-Multiplex/Demultiplex-Einheit (102) dazu ausgelegt ist, basierend auf der Wellenlänge eines oder mehrerer optischer Eingangssignale, das eine oder die mehreren optischen Eingangssignale in ein Mikroringfilter einzugeben, das einem Band entspricht, zu dem das eine oder die mehreren optischen Eingangssignale gehören, wobei ein Band mindestens einem Mikroringfilter entspricht, jedes Mikroringfilter eine unterschiedliche Resonanzwellenlänge aufweist und das eine oder die mehreren optischen Eingangssignale ein optisches Signal am Eingangsanschluss (103, 201, 317, 525) und/oder am Add-Anschluss (105, 203, 320, 521, 523), falls vorhanden, umfassen;
die Filtereinheit (101, 205) dazu ausgelegt ist, ein optisches Zielsignal aus dem Eingangsanschluss (103, 201, 317, 525) mit dem Drop-Anschluss (106, 204, 319, 522, 524), falls vorhanden, zu koppeln und/oder ein optisches Zielsignal aus dem Add-Anschluss (105, 203, 320, 521, 523), falls vorhanden, mit dem Ausgangsanschluss (104, 202, 318, 526) zu koppeln, wobei das optische Zielsignal ein optisches Signal ist, dessen Wellenlänge gleich einer Resonanzwellenlänge des Mikroringfilters in dem optischen Eingangssignal ist; und
die Wellenband-Multiplex/Demultiplex-Einheit (102) ferner dazu ausgelegt ist, das optische Zielsignal auszugeben, das mit dem Ausgangsanschluss (104, 202, 318, 526) und/oder dem Drop-Anschluss (106, 204, 319, 522, 524), falls vorhanden, gekoppelt ist.

2. Gerät (100, 200) gemäß Anspruch 1, wobei das Mikroringfilter einen abstimmbaren Koppler aufweist und die Filtereinheit (101, 205) speziell dazu ausgelegt ist, durch Verwendung des abstimmbaren Kopplers das Mikroringfilter in einen Arbeitszustand zu steuern, und das optische Zielsignal aus dem Eingangsanschluss (103, 201, 317, 525) mit dem Drop-Anschluss (106, 204, 319, 522, 524), falls vorhanden, zu koppeln und/oder das optische Zielsignal aus dem Add-Anschluss (105, 203, 320, 521, 523), falls vorhanden, mit dem Ausgangsanschluss (104, 202, 318, 526) zu koppeln.

3. Gerät (100, 200) gemäß Anspruch 1 oder 2, wobei die Wellenband-Multiplex/Demultiplex-Einheit (102) ein erstes Gitterkopplungsmodul (207) umfasst, wobei das erste Gitterkopplungsmodul (207) einen Gitterkoppler und einen Wellenleiterrichtungskoppler umfasst, und eine Anzahl von Gitterkopplern und eine Anzahl von Wellenleiterrichtungskopplern beide Y sind, wobei Y gleich (A*N) ist, A eine ganze Zahl nicht kleiner als 1 ist, N eine Anzahl von Bändern angibt und N eine ganze Zahl nicht kleiner als 2 ist; und
in dem ersten Gitterkopplungsmodul (207) ein Drop-Anschluss jedes Gitterkopplers mit einem Add-Anschluss eines entsprechenden Mikroringfilters verbunden ist, und ein Add-Anschluss jedes Wellenleiterrichtungskopplers mit einem Drop-Anschluss des entsprechenden Mikroringfilters verbunden ist; und ein Eingangsanschluss des ersten Gitterkopplers der Add-Anschluss ist, ein Ausgangsanschluss eines X-ten Gitterkopplers mit einem Eingangsanschluss eines X-ten Wellenleiterrichtungskopplers verbunden ist, ein Ausgangsanschluss des X-ten Wellenleiterrichtungskopplers mit einem Eingangsanschluss eines (X+1)-ten Gitterkopplers verbunden ist, und ein Ausgangsanschluss eines Y-ten Wellenleiterrichtungskopplers der Drop-Anschluss ist, wobei X eine positive ganze Zahl kleiner als Y ist.

4. Gerät (100, 200) gemäß Anspruch 1 oder 2, wobei die Wellenband-Multiplex/Demultiplex-Einheit (102) einen ersten Bandpass-Kombinierer/Splitter (208) und einen zweiten Bandpass-Kombinierer/Splitter (209) umfasst, wobei eine Anzahl von ersten Bandpass-Kombinierern/Splittern (208) und eine Anzahl von zweiten Bandpass-Kombinierern/Splittern (209) beide gleich A sind, wobei A eine ganze Zahl nicht kleiner als 1 ist; jeder erste Bandpass-Kombinierer/Splitter (208) einen Eingangsanschluss und N Ausgangsanschlüsse umfasst, und jeder zweite Bandpass-Kombinierer/Splitter (209) N Eingangsanschlüsse und einen Ausgangsanschluss umfasst; der eine Eingangsanschluss des ersten Bandpass-Kombinierers/Splitters (208) ein Add-Anschluss ist und ein Ausgangsanschluss des ersten Bandpass-Kombinierers/Splitters (208) entsprechend mit einem Add-Anschluss eines Mikroringfilters verbunden ist; und der eine Ausgangsanschluss des zweiten Bandpass-Kombinierers/Splitters (209) ein Drop-Anschluss ist und ein Eingangsanschluss des zweiten Bandpass-Kombinierers/Splitters (209) entsprechend mit einem Drop-Anschluss des einen Mikroringfilters verbunden ist, wobei N eine Anzahl von Bändern darstellt und N eine ganze Zahl nicht kleiner als 2 ist.

5. Gerät (100, 200) gemäß Anspruch 3 oder 4, wobei die Wellenband-Multiplex/Demultiplex-Einheit (102) ferner ein zweites Gitterkopplungsmodul (206) umfasst, wobei das zweite Gitterkopplungsmodul einen Gitterkoppler umfasst und eine Anzahl von Gitterkopplern in dem zweiten Gitterkopplungsmodul gleich der Anzahl N von Bändern ist; und
wenn A gleich 1 ist, ein Band einem Mikroringfilter entspricht, die Filtereinheit (101, 205) N Mikroringfilter umfasst, und ein Gitterkoppler im zweiten Gitterkopplungsmodul einem Mikroringfilter entspricht; ein Drop-Anschluss jedes Gitterkopplers des zweiten Gitterkopplungsmoduls (206) mit einem Anschluss eines entsprechenden Mikroringfilters verbunden ist, und ein Add-Anschluss jedes Gitterkopplers getrennt mit einem Ausgangsanschluss des entsprechenden Mikroringfilters verbunden ist; und ein Eingangsanschluss eines ersten Gitterkopplers (207) der Eingangsanschluss ist, ein Anschluss eines M-ten Gitterkopplers mit einem Eingangsanschluss eines (M+1)-ten Gitterkopplers gekoppelt ist, und ein Ausgangsanschluss eines N-ten Gitterkopplers der Ausgangsanschluss ist, wobei M eine ganze Zahl nicht größer als N ist.

6. Gerät (100, 200) gemäß Anspruch 3 oder 4, wobei die Wellenband-Multiplex/Demultiplex-Einheit (102) ferner ein zweites Gitterkopplungsmodul (206) umfasst, wobei das zweite Gitterkopplungsmodul (206) einen Gitterkoppler umfasst, und eine Anzahl von Gitterkopplern in dem zweiten Gitterkopplungsmodul (206) gleich der Anzahl N von Bändern ist; und
wenn A eine ganze Zahl größer als 1 ist, ein Band der Vielzahl von Mikroringfiltern entspricht, die Filtereinheit (101, 205) (A*N) Mikroringfilter umfasst, und ein Gitterkoppler in dem zweiten Gitterkopplungsmodul (206) A Mikroringfiltern entspricht; in dem zweiten Gitterkopplungsmodul (206) ein Drop-Anschluss jedes Gitterkopplers getrennt mit einem Eingangsanschluss eines ersten Mikroringfilters in den A entsprechenden Mikroringfiltern verbunden ist, und ein Add-Anschluss jedes Gitterkopplers getrennt mit einem Ausgangsanschluss eines N-ten Mikroringfilters in den A entsprechenden Mikroringfiltern verbunden ist; ein Eingangsanschluss eines ersten Gitterkopplers (207) der Eingangsanschluss ist, ein Ausgangsanschluss eines M-ten Gitterkopplers mit einem Eingangsanschluss eines (M+1)-ten Gitterkopplers gekoppelt ist und ein Ausgangsanschluss eines N-ten Gitterkopplers der Ausgangsanschluss ist, wobei M eine ganze Zahl nicht größer als N ist; und in den A Mikroringfiltern, die jedem Gitterkoppler entsprechen, ein Ausgangsanschluss eines X-ten Mikroringfilters mit einem Eingangsanschluss eines (X+1)-ten Mikroringfilters verbunden ist, wobei X eine ganze Zahl nicht kleiner als 1 ist.

7. Gerät (100, 200) gemäß Anspruch 3 oder 4, wobei die Wellenband-Multiplex/Demultiplex-Einheit (102) ferner einen dritten Bandpass-Kombinierer/Splitter und einen vierten Bandpass-Kombinierer/Splitter umfasst, wobei der dritte Bandpass-Kombinierer/Splitter einen Eingangsanschluss und N Ausgangsanschlüsse umfasst, und der vierte Bandpass-Kombinierer/Splitter N Eingangsanschlüsse und einen Ausgangsanschluss umfasst;
wenn A gleich 1 ist, ein Band einem Mikroringfilter entspricht, die Filtereinheit (101, 205) N Mikroringfilter umfasst, und der Eingangsanschluss des dritten Bandpass-Kombinierers/Splitters der Eingangsanschluss ist; und die N Ausgangsanschlüsse des dritten Bandpass-Kombinierers/Splitters getrennt mit den Eingangsanschlüssen der N Mikroringfilter verbunden sind, die Ausgangsanschlüsse der N Mikroringfilter getrennt mit den N Eingangsanschlüssen des vierten Bandpass-Kombinierers/Splitters verbunden sind, und der Ausgangsanschluss des vierten Bandpass-Kombinierers/Splitters der Ausgangsanschluss ist.

8. Gerät (100, 200) gemäß Anspruch 3 oder 4, wobei die Wellenband-Multiplex/Demultiplex-Einheit (102) ferner einen dritten Bandpass-Kombinierer/Splitter und einen vierten Bandpass-Kombinierer/Splitter umfasst, wobei der dritte Bandpass-Kombinierer/Splitter einen Eingangsanschluss und N Ausgangsanschlüsse umfasst, und der vierte Bandpass-Kombinierer/Splitter N Eingangsanschlüsse und einen Ausgangsanschluss umfasst;
wenn A eine ganze Zahl größer als 1 ist, ein Band der Vielzahl von Mikroringfiltern entspricht, die Filtereinheit (101, 205) (A*N) Mikroringfilter umfasst; der Eingangsanschluss des dritten Bandpass-Kombinierers/Splitters der Eingangsanschluss ist, ein Ausgangsanschluss des dritten Bandpass-Kombinierers/Splitters und ein Eingangsanschluss des vierten Bandpass-Kombinierers/Splitters A gleichen Mikroringfiltern entsprechen; jeder Ausgangsanschluss des dritten Bandpass-Kombinierers/Splitters mit einem Eingangsanschluss eines ersten Mikroringfilters in den A entsprechenden Mikroringfiltern verbunden ist, jeder Eingangsanschluss des vierten Bandpass-Kombinierers/Splitters mit einem Ausgangsanschluss eines A-ten Mikroringfilters in den A entsprechenden Mikroringfiltern verbunden ist und der Ausgangsanschluss des vierten Bandpass-Kombinierers/Splitters der Ausgangsanschluss ist; und in den A entsprechenden Mikroringfiltern ein Anschluss eines X-ten Mikroringfilters mit einem Eingangsanschluss eines (X+1)-ten Mikroringfilters verbunden ist, wobei X eine ganze Zahl nicht kleiner als 1 ist.

9. Gerät (100, 200) gemäß einem der Ansprüche 1 bis 8, wobei
die Filtereinheit (101, 205) ferner dazu ausgelegt ist, eine Resonanzwellenlänge des ersten Mikroringfilters gleich einer Resonanzwellenlänge eines zweiten Mikroringfilters einzustellen; und
die Wellenband-Multiplex/Demultiplex-Einheit (102) ferner dazu ausgelegt ist, ein Arbeitsband eines Wellenleiterrichtungskopplers, das dem ersten Mikroringfilter entspricht, von einem Band, das dem ersten Mikroringfilter entspricht, auf ein Band, das dem zweiten Mikroringfilter entspricht, einzustellen, um ein optisches Zielsignal, das dem zweiten Mikroringfilter entspricht, durch Verwendung des ersten Mikroringfilters zu sichern, wobei sowohl das erste Mikroringfilter als auch das zweite Mikroringfilter ein oder mehrere Filter in der Filtereinheit (101, 205) sein können.

10. Gerät (100, 200) gemäß einem der Ansprüche 1 bis 9, wobei
der Add-Anschluss (105, 203, 320, 521, 523), falls vorhanden, oder der Drop-Anschluss (106, 204, 319, 522, 524), falls vorhanden, mit einem keilförmigen Wellenleiter verbunden ist oder mit einem Antireflexionswellenleiter oder einem Sperrwellenleiter, der auf einem absorbierenden Material basiert, verbunden ist; oder ein Wellenleiter, der dem Add-Anschluss oder dem Drop-Anschluss des Mikroringfilters entspricht, ein keilförmiger Wellenleiter oder ein Antireflexionswellenleiter oder ein Sperrwellenleiter ist, der auf einem absorbierenden Material basiert.

11. Gerät (100, 200) gemäß einem der Ansprüche 3, 5 bis 8, wobei der Gitterkoppler einen gitterunterstützten Richtungskoppler und/oder einen gitterunterstützten Gegenrichtungskoppler umfasst.

12. Steuerverfahren für ein optisches Add/Drop-Multiplexgerät (100, 200), umfassend:
Eingeben (901), basierend auf der Wellenlänge eines oder mehrerer optischer Eingangssignale, des einen oder der mehreren optischen Eingangssignale in ein Mikroringfilter einer Vielzahl von Mikroringfiltern, das einem Band entspricht, zu dem das eine oder die mehreren optischen Eingangssignale gehören, wobei ein Band mindestens einem Mikroringfilter der Vielzahl von Mikroringfiltern entspricht,
und jedes Mikroringfilter eine andere Resonanzwellenlänge aufweist, und das eine oder die mehreren optischen Eingangssignale ein optisches Signal an einem Eingangsanschluss (103, 201, 317, 525) und/oder einem Add-Anschluss (105, 203, 320, 521, 523) umfassen;
Koppeln (902) eines optischen Zielsignals aus dem Eingangsanschluss (103, 201, 317, 525) mit einem Drop-Anschluss (106, 204, 319, 522, 524) und/oder Koppeln des optischen Zielsignals aus dem Add-Anschluss (105, 203, 320, 521, 523) mit einem Ausgangsanschluss (104, 202, 318, 526), wobei das optische Zielsignal ein optisches Signal ist, dessen Wellenlänge gleich einer Resonanzwellenlänge des Mikroringfilters im optischen Eingangssignal ist; und
Ausgeben (903) des optischen Zielsignals, das mit dem Ausgangsanschluss (104, 202, 318, 526) und/oder dem Drop-Anschluss (106, 204, 319, 522, 524) gekoppelt ist.

13. Verfahren gemäß Anspruch 12, wobei das Mikroringfilter einen abstimmbaren Koppler aufweist, und das Koppeln eines optischen Zielsignals aus dem Eingangsanschluss (103, 201, 317, 525) mit dem Drop-Anschluss (106, 204, 319, 522, 524) und/oder das Koppeln eines optischen Zielsignals aus dem Add-Anschluss (105, 203, 320, 521, 523) mit dem Ausgangsanschluss (104, 202, 318, 526) Folgendes umfasst:
Steuern des Mikroringfilters, durch Verwendung des abstimmbaren Kopplers in einen Arbeitszustand und Koppeln des optischen Zielsignals aus dem Eingangsanschluss (103, 201, 317, 525) mit dem Drop-Anschluss (106, 204, 319, 522, 524) und/oder Koppeln des optischen Zielsignals aus dem Add-Anschluss (105, 203, 320, 521, 523) mit dem Ausgangsanschluss (104, 202, 318, 526).

14. Verfahren gemäß Anspruch 12 oder 13, wobei das Verfahren ferner umfasst:
Einstellen einer Resonanzwellenlänge eines ersten Mikroringfilters gleich einer Resonanzwellenlänge eines zweiten Mikroringfilters; und
Einstellen eines Arbeitsbandes eines zweiten Kopplers, das dem ersten Mikroringfilter entspricht, von einem Band, das dem ersten Mikroringfilter entspricht, auf ein Band, das dem zweiten Mikroringfilter entspricht, um ein optisches Zielsignal, das dem zweiten Mikroringfilter entspricht, durch Verwendung des ersten Mikroringfilters zu sichern, wobei sowohl das erste Mikroringfilter als auch das zweite Mikroringfilter ein oder mehrere Filter in einer Filtereinheit (101, 205) sein können.

15. Verfahren gemäß Anspruch 13, wobei das Verfahren ferner umfasst:
Steuern des Mikroringfilters durch Verwendung des abstimmbaren Kopplers in einen Offline-Zustand, und Koppeln des einen oder der mehreren optischen Eingangssignale aus dem Eingangsanschluss (103, 201, 317, 525) in den Ausgangsanschluss (104, 202, 318, 526) oder Koppeln des einen oder der mehreren optischen Eingangssignale aus dem Add-Anschluss (105, 203, 320, 521, 523) in den Drop-Anschluss (106, 204, 319, 522, 524); und
Ausgeben des einen oder der mehreren optischen Eingangssignale, die mit dem Ausgangsanschluss (104, 202, 318, 526) und/oder dem Drop-Anschluss (106, 204, 319, 522, 524) gekoppelt sind.

## Revendications

1. Appareil multiplexeur à insertion/extraction optique (100, 200), l'appareil multiplexeur à insertion/extraction optique étant une puce optique intégrée, et l'appareil multiplexeur à insertion/extraction optique comprenant un port d'entrée (103, 201, 317, 525), un port de sortie (104, 202, 318, 526), un port d'insertion (105, 203, 320, 521, 523) et/ou un port d'extraction (106, 204, 319, 522, 524), une unité de filtrage (101, 205) et une unité de multiplexage/démultiplexage de bandes d'ondes (102), dans lequel
l'unité de filtrage (101, 205) comprend une pluralité de filtres à micro-anneaux, l'unité de filtrage (101, 205) est reliée à l'unité de multiplexage/démultiplexage de bandes d'ondes (102), et l'unité de multiplexage/démultiplexage de bandes d'ondes est reliée séparément au port d'entrée (103, 201, 317, 525), au port de sortie (104, 202, 318, 526), au port d'insertion (105, 203, 320, 521, 523), s'il est présent, et au port d'extraction (106, 204, 319, 522, 524), s'il est présent ;
l'unité de multiplexage/démultiplexage de bandes d'ondes (102) est configurée pour entrer, sur la base de la longueur d'onde d'un ou plusieurs signaux optiques d'entrée, les un ou plusieurs signaux optiques d'entrée dans un filtre à micro-anneaux correspondant à une bande à laquelle les un ou plusieurs signaux optiques d'entrée appartiennent, une bande correspondant à au moins un filtre à micro-anneaux, chaque filtre à micro-anneaux ayant une longueur d'onde de résonance différente, et les un ou plusieurs signaux optiques d'entrée comprenant un signal optique au niveau du port d'entrée (103, 201, 317, 525) et/ou du port d'insertion (105, 203, 320, 521, 523), s'il est présent ;
l'unité de filtrage (101, 205) est configurée pour coupler un signal optique cible issu du port d'entrée (103, 201, 317, 525) au port d'extraction (106, 204, 319, 522, 524), s'il est présent, et/ou pour coupler un signal optique cible issu du port d'insertion (105, 203, 320, 521, 523), s'il est présent, au port de sortie (104, 202, 318, 526), le signal optique cible étant un signal optique dont la longueur d'onde est égale à une longueur d'onde de résonance du filtre à micro-anneaux, dans le signal optique d'entrée ; et
l'unité de multiplexage/démultiplexage de bandes d'ondes (102) est également configurée pour délivrer en sortie le signal optique cible couplé au port de sortie (104, 202, 318, 526) et/ou au port d'extraction (106, 204, 319, 522, 524), s'il est présent.

2. Appareil (100, 200) selon la revendication 1, dans lequel le filtre à micro-anneaux possède un coupleur accordable et l'unité de filtrage (101, 205) est spécifiquement configurée pour commander, au moyen du coupleur accordable, le filtre à micro-anneaux pour le mettre dans un état de fonctionnement, et coupler le signal optique cible issu du port d'entrée (103, 201, 317, 525) au port d'extraction (106, 204, 319, 522, 524), s'il est présent, et/ou coupler le signal optique cible issu du port d'insertion (105, 203, 320, 521, 523), s'il est présent, au port de sortie (104, 202, 318, 526).

3. Appareil (100, 200) selon la revendication 1 ou 2, dans lequel l'unité de multiplexage/démultiplexage de bandes d'ondes (102) comprend un premier module de couplage à réseau (207), le premier module de couplage à réseau (207) comprenant un coupleur à réseau et un coupleur directionnel à guide d'ondes, et une quantité de coupleurs à réseau et une quantité de coupleurs directionnels à guide d'ondes étant toutes deux égales à Y, où Y est égal à (A*N), A est un entier non inférieur à 1, N indique une quantité de bandes, et N est un entier non inférieur à 2 ; et
dans le premier module de couplage à réseau (207), un port d'extraction de chaque coupleur à réseau est relié à un port d'insertion d'un filtre à micro-anneaux correspondant, et un port d'insertion de chaque coupleur directionnel à guide d'ondes est relié à un port d'extraction du filtre à micro-anneaux correspondant ; et un port d'entrée du premier coupleur à réseau est le port d'insertion, un port de sortie d'un X^{ième} coupleur à réseau est relié à un port d'entrée d'un X^{ième} coupleur directionnel à guide d'ondes, un port de sortie du X^{ième} coupleur directionnel à guide d'ondes est relié à un port de sortie d'un (X+1)^{ième} coupleur à réseau, et un port de sortie d'un Y^{ième} coupleur directionnel à guide d'ondes est le port d'extraction, où X est un entier positif inférieur à Y.

4. Appareil (100, 200) selon la revendication 1 ou 2, dans lequel l'unité de multiplexage/démultiplexage de bandes d'ondes (102) comprend un premier combineur/diviseur passe-bande (208) et un deuxième combineur/diviseur passe-bande (209), une quantité de premiers combineurs/diviseurs passe-bande (208) et une quantité de deuxièmes combineurs/diviseurs passe-bande (209) étant toutes deux égales à A, où A est un entier non inférieur à 1 ; chaque premier combineur/diviseur passe-bande (208) comprend un port d'entrée et N ports de sortie, et chaque deuxième combineur/diviseur passe-bande (209) comprend N ports d'entrée et un port de sortie ; ledit port d'entrée du premier combineur/diviseur passe-bande (208) est un port d'insertion, et un port de sortie du premier combineur/diviseur passe-bande (208) est relié de manière correspondante à un port d'insertion d'un filtre à micro-anneaux ; et ledit port de sortie du deuxième combineur/diviseur passe-bande (209) est un port d'extraction, et un port d'entrée du deuxième combineur/diviseur passe-bande (209) est relié de manière correspondante à un port d'extraction dudit filtre à micro-anneaux, où N représente une quantité de bandes, et N est un entier non inférieur à 2.

5. Appareil (100, 200) selon la revendication 3 ou 4, dans lequel l'unité de multiplexage/démultiplexage de bandes d'ondes (102) comprend également un deuxième module de couplage à réseau (206), le deuxième module de couplage à réseau comprenant un coupleur à réseau, et une quantité de coupleurs à réseau du deuxième module de couplage à réseau étant égale à la quantité N de bandes ; et
si A est égal à 1, une bande correspond à un filtre à micro-anneaux, l'unité de filtrage (101, 205) comprend N filtres à micro-anneaux, et un coupleur à réseau du deuxième module de couplage à réseau correspond à un filtre à micro-anneaux ; un port d'extraction de chaque coupleur à réseau du deuxième module de couplage à réseau (206) est relié à un port d'entrée d'un filtre à micro-anneaux correspondant, et un port d'insertion de chaque coupleur à réseau est relié séparément à un port de sortie du filtre à micro-anneaux correspondant ; et un port d'entrée d'un premier coupleur à réseau (207) est le port d'entrée, un port de sortie d'un M^{ième} coupleur à réseau est couplé à un port d'entrée d'un (M+1)^{ième} coupleur à réseau, et un port de sortie d'un N^{ième} coupleur à réseau est le port de sortie, où M est un entier non supérieur à N.

6. Appareil (100, 200) selon la revendication 3 ou 4, dans lequel l'unité de multiplexage/démultiplexage de bandes d'ondes (102) comprend également un deuxième module de couplage à réseau (206), le deuxième module de couplage à réseau (206) comprenant un coupleur à réseau, et une quantité de coupleurs à réseau du deuxième module de couplage à réseau (206) étant égale à la quantité N de bandes ; et
si A est un entier supérieur à 1, une bande correspond à la pluralité de filtres à micro-anneaux, l'unité de filtrage (101, 205) comprend (A*N) filtres à micro-anneaux, et un coupleur à réseau du deuxième module de couplage à réseau (206) correspond à A filtres à micro-anneaux ; dans le deuxième module de couplage à réseau (206), un port d'extraction de chaque coupleur à réseau est relié séparément à un port d'entrée d'un premier filtre à micro-anneaux des A filtres à micro-anneaux correspondants, et un port d'insertion de chaque coupleur à réseau est relié séparément à un port de sortie d'un A^{ième} filtre à micro-anneaux des A filtres à micro-anneaux correspondants ; un port d'entrée d'un premier coupleur à réseau (207) est le port d'entrée, un port de sortie d'un M^{ième} coupleur à réseau est couplé à un port d'entrée d'un (M+1)^{ième} coupleur à réseau, et un port de sortie d'un N^{ième} coupleur à réseau est le port de sortie, où M est un entier non supérieur à N ; et dans les A filtres à micro-anneaux correspondant à chaque coupleur à réseau, un port de sortie d'un X^{ième} filtre à micro-anneaux est relié à un port d'entrée d'un (X+1)^{ième} filtre à micro-anneaux, où X est un entier non inférieur à 1.

7. Appareil (100, 200) selon la revendication 3 ou 4, dans lequel l'unité de multiplexage/démultiplexage de bandes d'ondes (102) comprend également un troisième combineur/diviseur passe-bande et un quatrième combineur/diviseur passe-bande, le troisième combineur/diviseur passe-bande comprenant un port d'entrée et N ports de sortie, et le quatrième combineur/diviseur passe-bande comprenant N ports d'entrée et un port de sortie ;
si A est égal à 1, une bande correspond à un filtre à micro-anneaux, l'unité de filtrage (101, 205) comprend N filtres à micro-anneaux, et le port d'entrée du troisième combineur/diviseur passe-bande est le port d'entrée ; et les N ports de sortie du troisième combineur/diviseur passe-bande sont reliés séparément aux ports d'entrée des N filtres à micro-anneaux, les ports de sortie des N filtres à micro-anneaux sont reliés séparément aux N ports d'entrée du quatrième combineur/diviseur passe-bande, et le port de sortie du quatrième combineur/diviseur passe-bande est le port de sortie.

8. Appareil (100, 200) selon la revendication 3 ou 4, dans lequel l'unité de multiplexage/démultiplexage de bandes d'ondes (102) comprend également un troisième combineur/diviseur passe-bande et un quatrième combineur/diviseur passe-bande, le troisième combineur/diviseur passe-bande comprenant un port d'entrée et N ports de sortie, et le quatrième combineur/diviseur passe-bande comprenant N ports d'entrée et un port de sortie ;
si A est un entier supérieur à 1, une bande correspond à la pluralité de filtres à micro-anneaux, l'unité de filtrage (101, 205) comprend (A*N) filtres à micro-anneaux ; le port d'entrée du troisième combineur/diviseur passe-bande est le port d'entrée, un port de sortie du troisième combineur/diviseur passe-bande et un port d'entrée du quatrième combineur/diviseur passe-bande correspondent à A mêmes filtres à micro-anneaux ; chaque port de sortie du troisième combineur/diviseur passe-bande est relié à un port d'entrée d'un premier filtre à micro-anneaux des A filtres à micro-anneaux correspondants, chaque port d'entrée du quatrième combineur/diviseur passe-bande est relié à un port de sortie d'un A^{ième} filtre à micro-anneaux des A filtres à micro-anneaux correspondants, et le port de sortie du quatrième combineur/diviseur passe-bande est le port de sortie ; et dans les A filtres à micro-anneaux correspondants, un port de sortie d'un X^{ième} filtre à micro-anneaux est relié à un port d'entrée d'un (X+1)^{ième} filtre à micro-anneaux, où X est un entier non inférieur à 1.

9. Appareil (100, 200) selon l'une quelconque des revendications 1 à 8, dans lequel l'unité de filtrage (101, 205) est également configurée pour régler une longueur d'onde de résonance du premier filtre à micro-anneaux pour la rendre égale à une longueur d'onde de résonance d'un deuxième filtre à micro-anneaux, et
l'unité de multiplexage/démultiplexage de bandes d'ondes (102) est également configurée pour régler une bande de fonctionnement d'un coupleur directionnel à guide d'ondes correspondant au premier filtre à micro-anneaux pour la faire passer d'une bande correspondant au premier filtre à micro-anneaux à une bande correspondant au deuxième filtre à micro-anneaux, pour réaliser un signal optique cible de secours correspondant au deuxième filtre à micro-anneaux à l'aide du premier filtre à micro-anneaux, le premier filtre à micro-anneaux et le deuxième filtre à micro-anneaux pouvant tous deux être un ou plusieurs filtres de l'unité de filtrage (101,205).

10. Appareil (100, 200) selon l'une quelconque des revendications 1 à 9, dans lequel
le port d'insertion (105, 203, 320, 521, 523), s'il est présent, ou le port d'extraction (106, 204, 319, 522, 524), s'il est présent, est relié à un guide d'ondes en forme de coin, ou est relié à un guide d'ondes antiréflexion ou à un guide d'ondes bloquant qui est basé sur un matériau absorbant ; ou
un guide d'ondes correspondant au port d'insertion ou au port d'extraction du filtre à micro-anneaux est un guide d'ondes en forme de coin, ou un guide d'ondes antiréflexion ou un guide d'ondes bloquant qui est basé sur un matériau absorbant.

11. Appareil (100, 200) selon l'une quelconque des revendications 3, 5 à 8, dans lequel le coupleur à réseau comprend un coupleur directionnel assisté par réseau et/ou un coupleur contre-directionnel assisté par réseau.

12. Procédé de commande pour un appareil multiplexeur à insertion/extraction optique (100, 200), comprenant les étapes consistant à :
entrer (901), sur la base de la longueur d'onde d'un ou plusieurs signaux optiques d'entrée, les un ou plusieurs signaux optiques d'entrée dans un filtre à micro-anneaux d'une pluralité de filtres à micro-anneaux correspondant à une bande à laquelle les un ou plusieurs signaux optiques d'entrée appartiennent, une bande correspondant à au moins un filtre à micro-anneaux de la pluralité de filtres à micro-anneaux, et chaque filtre à micro-anneaux ayant une longueur d'onde de résonance différente, et les un ou plusieurs signaux optiques d'entrée comprenant un signal optique au niveau d'un port d'entrée (103, 201, 317, 525) et/ou d'un port d'insertion (105, 203, 320, 521, 523) ;
coupler (902) un signal optique cible issu du port d'entrée (103, 201, 317, 525) à un port d'extraction (106, 204, 319, 522, 524), et/ou coupler le signal optique cible issu du port d'insertion (105, 203, 320, 521, 523) à un port de sortie (104, 202, 318, 526), le signal optique cible étant un signal optique dont la longueur d'onde est égale à une longueur d'onde de résonance du filtre à micro-anneaux dans le signal optique d'entrée ; et
délivrer en sortie (903) le signal optique cible couplé au port de sortie (104, 202, 318, 526) et/ou au port d'extraction (106, 204, 319, 522, 524).

13. Procédé selon la revendication 12, dans lequel le filtre à micro-anneaux possède un coupleur accordable, et le couplage d'un signal optique cible issu du port d'entrée (103, 201, 317, 525) au port d'extraction (106, 204, 319, 522, 524), et/ou le couplage d'un signal optique cible issu du port d'insertion (105, 203, 320, 521, 523) au port de sortie (104, 202, 318, 526) comprennent les étapes consistant à :
commander, au moyen du coupleur accordable, le filtre à micro-anneaux pour le mettre dans un état de fonctionnement, et coupler le signal optique cible issu du port d'entrée (103, 201, 317, 525) au port d'extraction (106, 204, 319, 522, 524), et/ou coupler le signal optique cible issu du port d'insertion (105, 203, 320, 521, 523) au port de sortie (104, 202, 318, 526).

14. Procédé selon la revendication 12 ou 13, le procédé comprenant également les étapes consistant à :
régler une longueur d'onde de résonance d'un premier filtre à micro-anneaux pour la rendre égale à une longueur d'onde de résonance d'un deuxième filtre à micro-anneaux ; et
régler une bande de fonctionnement d'un deuxième coupleur correspondant au premier filtre à micro-anneaux pour la faire passer d'une bande correspondant au premier filtre à micro-anneaux à une bande correspondant au deuxième filtre à micro-anneaux, pour réaliser un signal optique cible de secours correspondant au deuxième filtre à micro-anneaux à l'aide du premier filtre à micro-anneaux, le premier filtre à micro-anneaux et le deuxième filtre à micro-anneaux pouvant tous deux être un ou plusieurs filtres d'une unité de filtrage (101, 205).

15. Procédé selon la revendication 13, le procédé comprenant également les étapes consistant à :
commander, à l'aide du coupleur accordable, le filtre à micro-anneaux pour le mettre dans un état hors ligne, et coupler les un ou plusieurs signaux optiques d'entrée issus du port d'entrée (103, 201, 317, 525) au port de sortie (104, 202, 318, 526), ou coupler les un ou plusieurs signaux optiques de sortie issus du port d'insertion (105, 203, 320, 521, 523) au port d'extraction (106, 204, 319, 522, 524) ; et
délivrer en sortie les un ou plusieurs signaux optiques d'entrée couplés au port de sortie (104, 202, 318, 526) et/ou au port d'extraction (106, 204, 319, 522, 524).
